# EUROPEAN PATENT SPECIFICATION

(11) **EP 4 000 852 B1**
(45) Date of publication and mention of the grant of the patent: **05.06.2024**
(21) Application number: 21207359.7
(22) Date of filing: 10.11.2021
(51) Int. Cl.: B29C 37/00, B29C 33/44, B29D 99/00, B29C 70/38

(54) **DEMOLDING OF LARGE COMPOSITE PARTS FOR AIRCRAFT**
ENTFORMUNG VON GROSSEN VERBUNDTEILEN FÜR FLUGZEUGE
DÉMOULAGE DE GRANDES PIÈCES COMPOSITES POUR AÉRONEF

(30) Priority: 18.11.2020 US 202063115043 P; 26.01.2021 NL 2027398
(43) Date of publication of application: 25.05.2022
(73) Proprietor: The Boeing Company, Arlington, VA 22202 (US)
(72) Inventor: Jones, Darrell D., Chicago, 60606-1596 (US); Smith, Daniel R., Chicago, 60606-1596 (US); Stone, Patrick B., Chicago, 60606-1596 (US); Raines, David, Chicago, 60606-1596 (US); Autry, Byron James, Chicago, 60606-1596 (US); Moore, Matthew B., Chicago, 60606-1596 (US)
(74) Representative: Arnold & Siedsma

(56) References cited:
- EP-A1- 3 552 773
- US-A1- 2004 050 498
- US-A1- 2008 196 825
- US-A1- 2013 000 815
- US-A1- 2013 020 030

## Description

### Field

The disclosure relates to the field of aircraft, and in particular, to fabrication of aircraft components.

### Background

Large composite parts, such as those spanning more than several meters (i.e. tens of feet), occupy substantial space within a factory floor. Laminates for these parts are laid up on a mandrel in a stationary work cell. The mandrel is moved to another stationary work cell and the laminate is hardened- into a composite part. Next, the composite part is removed from the mandrel and transported to a new stationary work cell to receive work.

Removing the composite part from the mandrel may be particularly difficult, as the composite part may have a shape that fills troughs on the surface of the mandrel.

The abstract of EP3 552 773 states "a flay assembly for separating a workpiece from a manufacturing fixture has a horizontal beam assembly and a pair of vertical beam assemblies. The horizontal beam assembly includes a horizontal beam having a horizontal drive motor. Each vertical beam assembly includes a vertical beam operably engaged to the horizontal drive motor and has a workpiece attachment assembly operably engaged to a vertical drive motor. The workpiece attachment assembly has an attachment mechanism attachable to the workpiece. The horizontal drive motor and the vertical drive motors are operable in a manner to move the vertical beams away from each other along a horizontal drive axis while simultaneously moving each workpiece attachment assembly along a vertical drive axis to cause the attachment mechanisms to pull the workpiece side portions away from the manufacturing fixture while a center support of the horizontal beam maintains a workpiece crown in contact with the manufacturing fixture."

The abstract of US2013/020030 states "a device for the production of structural components from a fiber composite material, the components being three-dimensionally arched over a large surface, including a jig having a convex mounting surface having receiving channels for the insertion of structural components, wherein the loaded jig interacts with a laminating bonding device having a corresponding shape for forming the structural component under pressure, wherein the mounting surface includes a plurality of individually elastically deformable mounting shell parts arranged adjacent to each other along at least one longitudinally extending pitch line and attached to a plurality of elastically deformable supporting frame elements extending on the interior of the shell at a right angle to the pitch line, and a plurality of actuators for deforming the mounting surface between an extended position (A) and at least one retracted position (B) to move the jig from the bonding device relative to the receiving channels without undercuts."

The abstract of US2013/000815 states: "a device and a method for manufacturing a fiber-reinforced fuselage shell for an aircraft, which fuselage shell for the purpose of reinforcement comprises several stringers that are spaced apart from each other, wherein the device includes a base frame comprising several supporting walls of different lengths for forming a curved mounting surface for the fuselage shell to be manufactured, wherein several actuators that extend radially outwards and that are longitudinally adjustable are affixed to the mounting surface, at the distal ends of which actuators in each case mold channels for receiving the stringers are attached, which mold channels are interconnected by means of flexible intermediate elements and/or further mold channels for forming a vacuum-tight closed mold surface."

The abstract of US2004/050498 states: "a forming jig includes a grid pattern of support walls arranged on a support base and having upper free ends located along an imaginary curved surface, and modular sectional profile members arranged on the walls to enclose a vacuum chamber within the jig. Grooves, channels and air passages between neighboring profile members communicate into the vacuum chamber. The outer surface of the profile members matches the intended inner surface of a structural component to be fabricated using the jig. In the fabrication process, a film is applied to the outer surface to pre-establish a vacuum, the film is removed while simultaneously a vacuum skin is applied, stringer members are set into the grooves, fiber skin layers are laid up, a sealant is applied around the perimeter, a structural shell is vacuumed onto the skin layers, and then this preformed component is removed from the jig, injected with resin unless the skin layers were pre-impregnated with resin, and cured."

The abstract of US2008/196825 states: "a method and a device for manufacturing hollow components out of a composite material, such as in particular sections of airplane fuselage, that include a skin and possibly strengthening elements. The method comprises inserting a multi-articulated arm fitted with a fiber placement head inside a female mold of elongated shape, said female mold being open via a longitudinal slit intended to receive the support means of said multi-articulated arm and a step of applying fibers to the inner molding surface of the female mold using the placement head to form said composite material skin, by displacement of the application head using the multi-articulated arm and relative displacement in translation of said support means of the multi-articulated arm along said longitudinal slit."

One solution is to utilize mandrels composed of multiple separable pieces and disassemble the mandrel and then separate it in pieces form the hardened composite part. However, separating the composite part from a mandrel during the demolding process remains a complex process.

Specifically, it is difficult to remove mandrel segments from a cured composite part while keeping strain for the composite part below a desired amount. Furthermore, segmented mandrels are expensive to design owing to their complexity. Seams between pieces of such mandrels may also cause undesirable ridges, bridges or valleys in the hardened composite part, which may result in a need for reworking of the composite part post demold. Another solution is to fabricate composite parts with less complex geometries that are easily separated from the mandrel when hardened. Furthermore, in certain fields such as aerospace, it is not feasible to reduce the complexity of curves in a composite part as a reduced complexity composite part may not have the desired performance. These issues are amplified for large composite parts.

Therefore, it would be desirable to have a method and apparatus that take into account at least some of the issues discussed above, as well as other possible issues.

### Summary

Embodiments described herein provide systems and methods for dynamically demolding a composite part from a mandrel, by iteratively applying elastic strain to individual arcuate sections of the composite part. By applying strain that is elastic, the composite part is flexed without permanently changing in shape. By iteratively applying the strain to varying sections of the composite part (e.g., in varying and increasing degrees), the composite part is rocked, twisted, and/or flexed off of the mandrel without permanently bending or deforming.

One embodiment is a method for demolding a composite part from a mandrel. The method includes mechanically coupling a first arm of an extraction tool to a first arcuate portion of a composite part that has been hardened onto a mandrel, mechanically coupling a second arm of an extraction tool to a second arcuate portion of the composite part, and separating the composite part from the mandrel by iteratively performing the following operations until the composite part no longer contacts the mandrel: elastically straining the first arcuate portion of the composite part via the first arm, and elastically straining the second arcuate portion of the composite part via the second arm.

A further embodiment is a non-transitory computer readable medium embodying programmed instructions which, when executed by a processor, are operable for performing a method of demolding a composite part from a mandrel. The method includes mechanically coupling a first arm of an extraction tool to a first arcuate portion of a composite part that has been hardened onto a mandrel, mechanically coupling a second arm of an extraction tool to a second arcuate portion of the composite part, and separating the composite part from the mandrel by iteratively performing the following operations until the composite part no longer contacts the mandrel: elastically straining the first arcuate portion of the composite part via the first arm, and elastically straining the second arcuate portion of the composite part via the second arm.

A further embodiment is a system for demolding a composite part from a mandrel. The system includes a first arm comprising: a flexural member that is complementary to a contour of a composite part that has been hardened onto a mandrel; and gripping units that are disposed along the flexural member and that mechanically couple with a first arcuate portion of the composite part. The system also includes a second arm comprising: a flexural member that is complementary to a contour of the composite part, and gripping units that are disposed along the flexural member and that mechanically couple with a second arcuate portion of the composite part. The system also includes a drive unit that selectively rotates the first arm and the second arm, resulting in elastic strain being iteratively applied to the first arcuate portion and the second arcuate portion.

A further embodiment is a method for demolding a composite part. The method includes elastically straining a first arcuate portion of a composite part away from a mandrel, elastically straining a second arcuate portion of the composite part away from the mandrel, and iteratively increasing the elastic strain applied to the first arcuate portion and the elastic strain applied to the second arcuate portion.

A further embodiment is a method of separating a composite part from a mandrel. The method includes separating a composite part from a mandrel via an extraction tool that iteratively elastically deflects arcuate portions of the composite part, transporting the composite part via the extraction tool to a track, and depositing the composite part onto the track.

Other illustrative embodiments (e.g., methods and computer-readable media relating to the foregoing embodiments) may be described below. The features, functions, and advantages that have been discussed can be achieved independently in various embodiments or may be combined in yet other embodiments further details of which can be seen with reference to the following description and drawings.

### Description of the Drawings

Some embodiments of the present disclosure are now described, by way of example only, and with reference to the accompanying drawings. The same reference number represents the same element or the same type of element on all drawings.
FIG. 1 is a perspective drawing of an aircraft in an illustrative embodiment
FIG. 1A is a block diagram of a demolding station for separating a composite part from a mandrel in an illustrative embodiment.
FIG. 2A-2C are flowcharts illustrating methods for demolding a composite part from a mandrel in illustrative embodiments.
FIGS. 3-7 depict an extraction tool that iteratively elastically deflects arcuate portions of a composite part in an illustrative embodiment.
FIG. 8 is a zoomed in view of a vacuum coupler of an arm of an extraction tool in an illustrative embodiment.
FIG. 9 is a perspective view of an Inner Mold Line (IML) conveyance and an Outer Mold Line (OML) conveyance for a composite part in an illustrative embodiment.
FIGS. 10A-10E depict transport of a composite part to a track via conveyances in an illustrative embodiment.
FIG. 11 is a flowchart illustrating a method for transferring a composite part to a conveyance for transport in an illustrative embodiment.
FIG. 12 is a further flowchart illustrating a method for transferring a composite part to a conveyance for transport in an illustrative embodiment.
FIG. 13 is a further flowchart illustrating a method for demolding and transferring a composite part in an illustrative embodiment.
FIG. 14 is a flow diagram of aircraft production and service methodology in an illustrative embodiment.
FIG. 15 is a block diagram of an aircraft in an illustrative embodiment.

### Description

The figures and the following description provide specific illustrative embodiments of the disclosure. It will thus be appreciated that those skilled in the art will be able to devise various arrangements that, although not explicitly described or shown herein, embody the principles of the disclosure and are included within the scope of the disclosure. Furthermore, any examples described herein are intended to aid in understanding the principles of the disclosure, and are to be construed as being without limitation to such specifically recited examples and conditions. As a result, the disclosure is not limited to the specific embodiments or examples described below, but by the claims.

Composite parts, such as Carbon Fiber Reinforced Polymer (CFRP) parts, are initially laid-up in multiple layers that together are referred to as a preform or laminate. Individual fibers within each layer of the preform are aligned parallel with each other, but different layers exhibit different fiber orientations in order to increase the strength of the resulting composite part along different dimensions. The preform includes a viscous resin that solidifies in order to harden the preform into a composite part (e.g., for use in an aircraft). Carbon fiber that has been impregnated with an uncured thermoset resin or a thermoplastic resin is referred to as "prepreg." Other types of carbon fiber include "dry fiber" which has not been impregnated with thermoset resin but may include a tackifier or binder. Dry fiber is infused with resin prior to curing. For thermoset resins, the hardening is a one-way process referred to as curing, while for thermoplastic resins, the resin reaches a viscous form if it is re-heated.

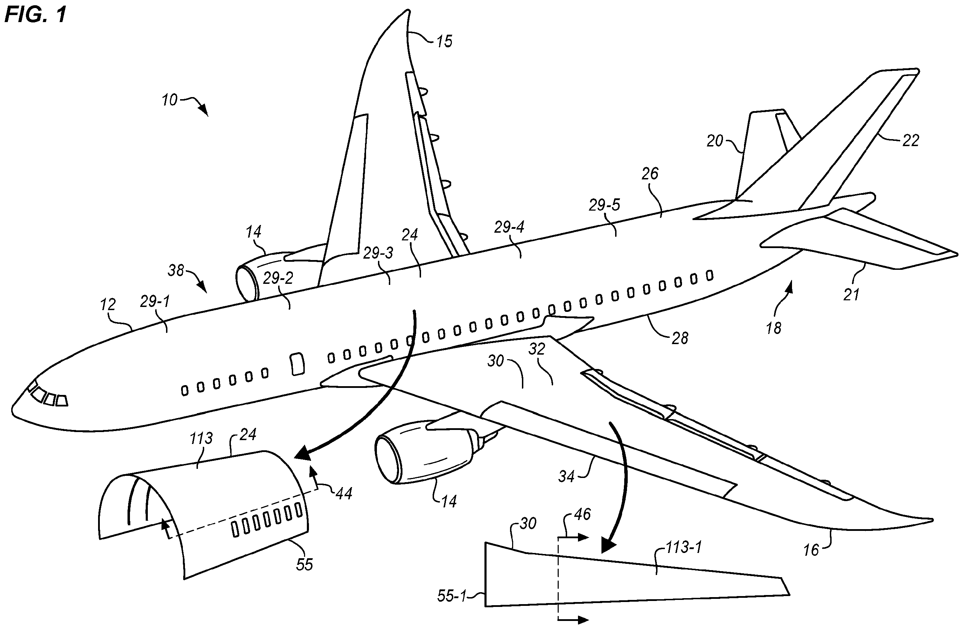

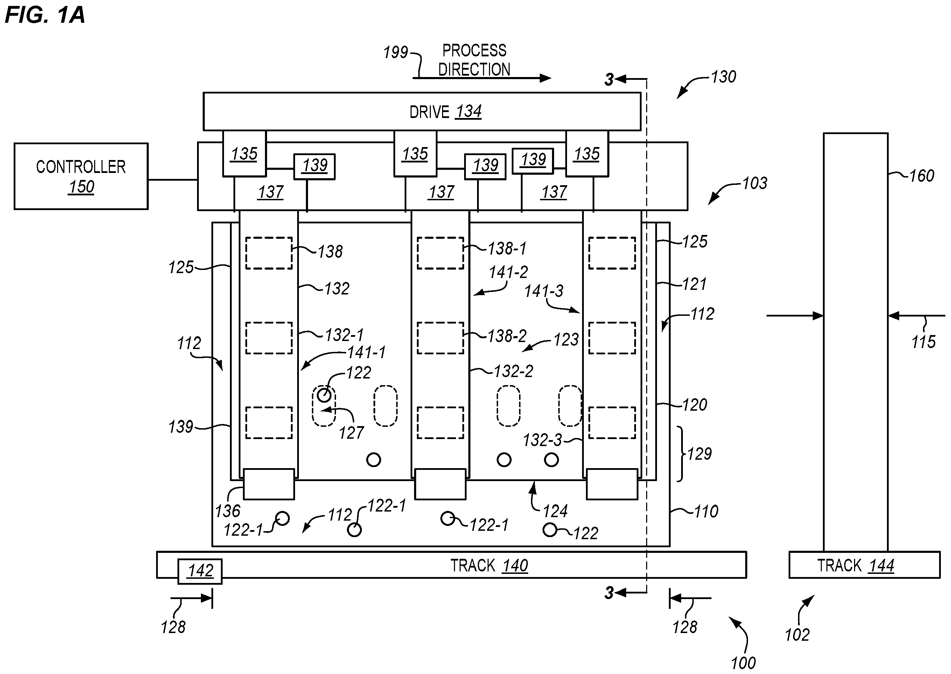

Turning now to FIG. 1, an illustration of an aircraft is depicted in which an illustrative embodiment may be implemented. Aircraft 10 is an example of an aircraft which can be formed from caul plates. Aircraft 10 is an example of an aircraft 10 which is formed of half-barrel sections 24 of fuselage 12.

In this illustrative example, aircraft 10 has wing 15 and wing 16 attached to body 38. Aircraft 10 includes engine 14 attached to wing 15 and engine 14 attached to wing 16.

Body 28 has tail section 18. Horizontal stabilizer 20, horizontal stabilizer 21, and vertical stabilizer 22 are attached to tail section 18 of body 38.

Fuselage 12 is fabricated from half-barrel sections 24 with an upper half-barrel section 26 joined to a lower half-barrel section 28 to form a full barrel section 29-1, 29-2, 29-3, 29-4, 29-5. The full barrel sections are joined serially to form fuselage 12.

Wing 15 and 16 are formed of wing panels 30 comprising upper wing panel 32 and a lower wing panel 34 joined together. Section cut 46 is a cut through of wing panel 30, 32 and corresponds to unhardened preform 189, 189-1 (FIG.1C and 1F). Section cut 46 is orientated chord wise roughly perpendicular to stringer 182.

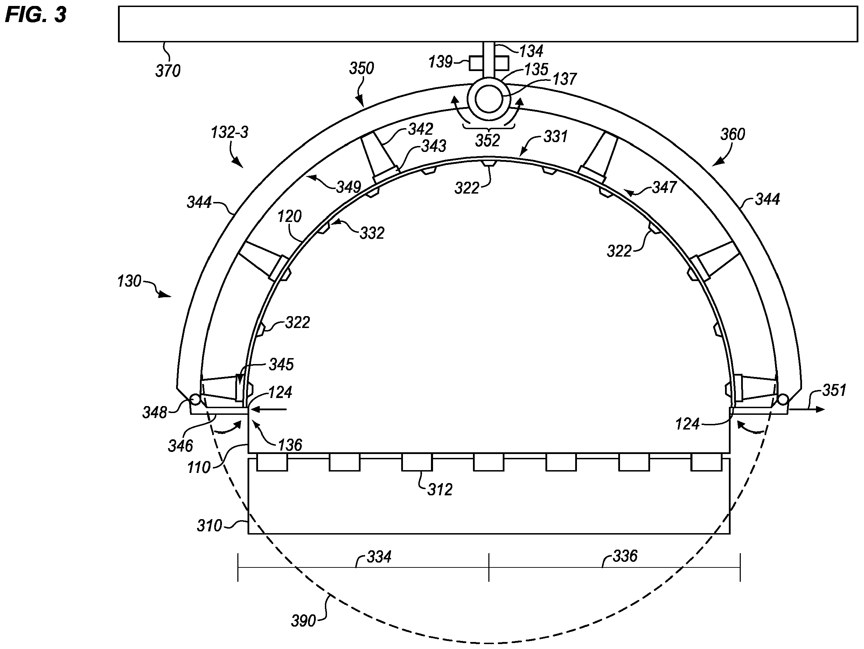

Section cut 44 is a cut through composite part 55 and corresponds to half-barrel section preform 24-1 (FIG. 3) prior to hardening. Section cut 44 is orientated longitudinally 181 through a contour 112-1 along a stringer.

FIG. 1A is a block diagram of a demolding station 100 for separating a composite part 120 (comprising fibers and hardened resin 123) from a mandrel 110 in an illustrative embodiment. The mandrel 110 defines a contour for the composite part 120, which may be a half-barrel section of aircraft fuselage, an aircraft wing, etc. The mandrel 110 comprises a metal tool that is capable of withstanding heat and pressure applied during hardening of the composite part. The demolding station 100 comprises any system, device, or component operable to demold a contoured composite part 120, and in particular a half-barrel section 121, from a surface 112 of the mandrel 110.

Within indexing feature addition and demold station 100, composite part 120, and in particular half-barrel section 121, are illustrated with flash edges and/or manufacturing excess trimmed to leave a bearing edge 124 or a final trim edge 125. The trimming is performed prior to demold and therefore while the composite part 120 is still on mandrel 110. Indexing features 122 are also installed in the indexing feature addition and demold station 100 prior to demold.

The mandrel 110 proceeds in a process direction 199 during fabrication. In this embodiment, the mandrel 110 proceeds along a track 140 (e.g., a series of discrete stanchions having rollers, a rail or set of rails or an AGV mandrel 110, etc.) for an indexing feature addition and demold station 100, and may be full pulsed 128 into and out of this station in the process direction 199. The track 140 serves to convey mandrel 110 into and out of indexing feature addition and demold station 100. The composite part 120 is advanced by a full pulse 128 out of indexing feature addition and demold station 100 and placed upon track 144 and advances by micro pulses 115 through work stations 160 in an assembly line 102 that perform post hardening assembly. Micro pulse 115 is illustrated at the width of work station 160, but micro pulse 115 are contemplated as being other multiples or fractions of work station 160 width. The mandrel 110 may then be returned for cleaning and reconditioning to the start of the layup process, while the composite part 120 proceeds in the process direction 199 through work stations 160 that perform assembly work on the composite part 120. In embodiments where the mandrel 110 is advanced by a micro pulse 115, work is either performed upon the composite part 120 during pauses between micro pulses 115, or during the pulses themselves or during micro pulse 115 and pause between micro pulses 115 or perform no work during either micro pulse 115 or pause between micro pulse 115.

An extraction tool 130 aligns itself to the mandrel 110, and/or to part indexing features 122 in the composite part 120, and/or mandrel indexing features 122-1 which are precisely placed into or onto the composite part 120 or mandrel 110. Part indexing features 122 are also referred to in the application in various places as indexing features 122, both of which refer to similar parts of the aircraft. After alignment to the mandrel 110, the extraction tool 130 places the arm sets 132 against the composite part 120, engages gripping units 138. The vacuum couplers 138-1 that removably join arm sets 132 to composite part 120 and end effectors 138-2 that physically grip the indexing features 122 at the composite part 120, etc. The lips 136 are placed against the bearing edge 124 of the composite part 120. While three arm sets 132 are shown in FIG. 1A, it will be appreciated that because FIG. 1A is a side view, the other half of the arm sets 132 are located other (not shown) side of the extraction tool 130. Furthermore, the number of arm sets 132 disposed on each side as a matter of design choice ranging from one or more depending on a geometry of the composite part 120.

While the part indexing features 122 are shown in a lower portion of the composite part 120, in further embodiments the part indexing features 122 are disposed in a manufacturing excess 127, 129 of the composite part 120 that will eventually be trimmed away, such as edge above the bearing edge 124 of the composite part 120, a manufacturing excess 127 for a window cut-out, a manufacturing excess (not shown) for a door cut-out, or a manufacturing excess (not shown) for an antenna cut-out.

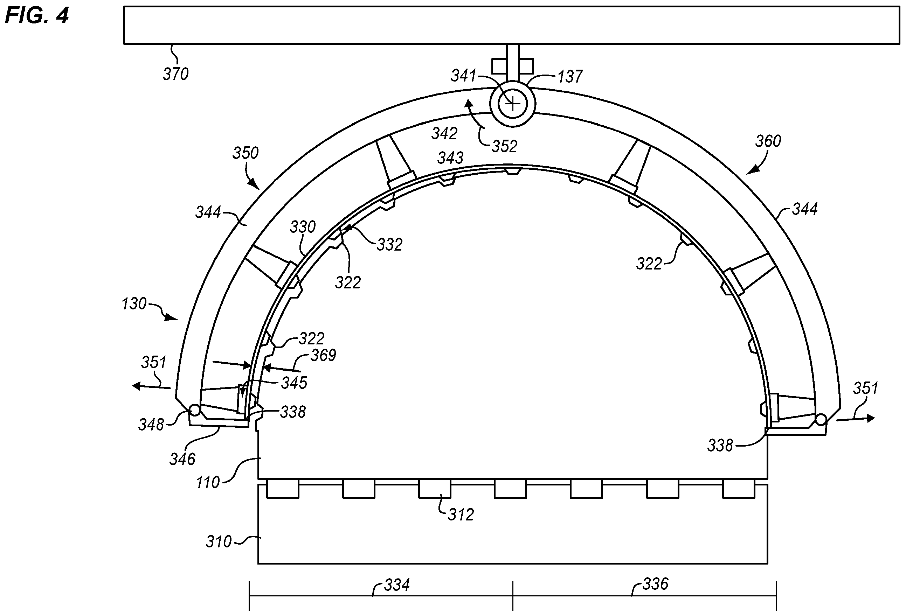

Once the arm sets 132 are coupled to composite part 120, a drive or drive unit 134 (e.g., a motor, actuator, etc.) proceeds to rotate/lift the arm sets 132 upward and away from the mandrel 110 while coupled to composite part 120 as part of the separating process. Rotating and/or lifting of the coupled arm sets 132 results in elastic strain at the composite part 120 by elastically deflecting it to break the bond of the resin with the mandrel 110 and the stringers 332 of composite part 120 (FIG. 4) to a trough 322 (FIG. 3 in the mandrel 110. The separating/lifting process may be performed separately and iteratively in a pulsed fashion introduced by the arm sets 132 into the composite part 120 according to the process direction 199 or its inverse. The separating/lifting process may be performed separately and iteratively in a pulsed fashion introduced by the arm sets 132 into the composite part 120 from lips 136 to actuatable joints 137 in an iterative fashion with one or more arm sets 132. The separating/lifting process may be performed on either side separately and iteratively in a pulsed fashion introduced by the arm sets 132 into the composite part 120. The pulsing operation of the arm sets 132 may be performed at increasing amounts of force or distance in order to slowly peel and break the resin adhesion of the composite part 120 from the mandrel 110. Furthermore, when one arm set 132 is applying force, other arm sets 132 may reduce applied force or stop applying force resulting in an undulating application to composite part 120.

In one embodiment, the drive 134 comprises one or more rotary actuators 135 that rotate actuatable joints 137 about axis 341 (FIG. 3) which are coupled with the arm sets 132. While rotary actuators 135 are discussed and illustrated, a linear application system (not shown) is also envisioned as an alternative or in addition to rotary actuators 135. This rotation causes the arm sets 132 to angularly deflect away from composite part 120. The amount of angular deflection of arm sets 132 is dynamically measured via sensors 139. Because the amount of angular deflection of the arm sets 132 can be used to determine amounts of strain at different locations within the composite part 120 to be demolded. The strain at a particular location can be measured by a number of means such as via bonded-on strain gauges. The strain is imputed to the structure based upon measured deflections of composite part 120 versus mandrel 110. In one embodiment, strain gauge bonding occurs when a part indexing feature 122 is installed and/or Radio Frequency Identifier (RFID) tag is bonded onto the composite part 120, or while trimming or machining the composite part 120 prior to demolding. In further embodiments, strain is determined based upon test data from sensor measurements of d composite part 120 versus deflection during demolding, and impute that data to the composite part 120 being demolded and/or based upon measured deflections of the composite part 120. Because strain is imputed to composite part 120 based upon measured deflections of composite part 120 or strain measurements from composite part 120 during demolding and is capable of being used to control drive 134 managed by a controller 150 to dynamically adjust the amount of angular deflection applied by the arm sets 132 in real time. This process during demolding ensures that desired levels of strain at the composite part 120 are not exceeded.

A controller 150 manages the operations of the extraction tool 130. In this embodiment, the controller 150 includes an interface (e.g., an ethernet interface, Universal Serial Bus (USB) interface, wireless interface, etc.) for communicating with the extraction tool 130, and includes a memory that stores one or more Numerical Control (NC) programs for operating the extraction tool 130. Controller 150 may further process feedback from the extraction tool 130, and provide instructions based on such feedback. For example, controller 150 may individually adjust an amount of force applied by each arm set 132 via drive 134 to composite part 120. The demolding force applied by each of the arm sets 132 achieve the desired amounts of strain within composite part 120. Controller 150 may determine the amount of strain based on a measured deflection of each of the arm sets 132. In this manner, controller 150 ensures that the arm sets 132 either work in unison and create a uniform elastic strain on an entire side of the composite part 120, or in a synchronized manner that creates a wave effect. A wave effect in composite part 120 is created when a first arm set 132-1 imparts a first amount of elastic strain in a first portion 141-1 of composite part 120, and then an elastic strain level in a second portion 141-2 of composite part 120 imparted by a second arm set 132-2 is increased to a second amount. The elastic strain imparted into the first portion 141-1 is maintained at the first amount or reduced when the elastic strain imparted into the second portion 141-2 is increased to the second amount. And then an elastic strain level in a third portion 141-3 of composite part 120 imparted by a third arm set 132-3 is increased to a third amount while either maintaining elastic strain in the first portion 141-1 or the second portion 141-2 at the first amount or second amount, respectively, or reducing either or both. By iteratively applying higher strain via either technique, the cured resin of the composite part 120 is separated from the mandrel 110 especially components of the composite part 120 that are partially surrounded by the mandrel 110, such as stringers 332 in troughs 322 within mandrel 110. Controller 150 may be implemented, for example, as custom circuitry, as a hardware processor executing programmed instructions, or some combination thereof.

Track 140 guides the mandrel 110 in the process direction 199, and may comprise rollers 312 (FIG. 3), rails, or other components that facilitate movement of the mandrel 110. The track 140 includes a drive 142 (e.g., a chain drive or other component) to move the mandrel 110 in one embodiment, while in further embodiments an Autonomous Guided Vehicle (AGV) is used to move the mandrel 110 either on track 140 or without a track. In one embodiment, the track 144 is also used to move the composite part 120, after the composite part 120 has been demolded and placed into position by the extraction tool 130.

After the composite part 120 has been demolded and moved in the process direction 199, it may receive work such as frame installation, window cut-out operations, fastening to other composite parts, etc. at downstream work stations 160. The mandrel 110 may be returned to a cleaning station (not shown). For example, the mandrel 110 may be sent to return line 103 and advanced in a pulse or micro pulse to reprocess it for reuse via cleaning, and resurfacing before receiving another laminate for hardening into a composite part 120.

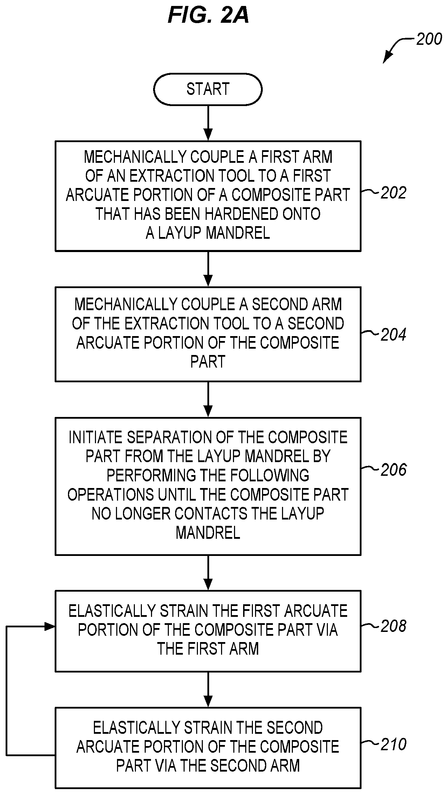

Illustrative details of the operation of demolding station 100 will be discussed with regard to FIG. 2A. Assume, for this embodiment, that the mandrel 110 has received a laminate, and that heat and pressure has been applied to harden the laminate onto the mandrel 110 in order to form the composite part 120.

FIG. 2A is a flowchart illustrating a method 200 for demolding a composite part 120 from a mandrel 110 in an illustrative embodiment. The steps of method 200 are described with reference to demolding station 100 of FIG. 1A, but those skilled in the art will appreciate that method 200 may be performed in other systems. The steps of the flowcharts described herein are not all inclusive and may include other steps not shown. The steps described herein may also be performed in an alternative order.

Step 202 comprises mechanically coupling a first arm (350) of the extraction tool 130 to a first portion 141-1 of a composite part 120 that has been hardened upon mandrel 110. In one embodiment, the composite part 120 is a half-barrel section 121 of fuselage that includes a skin 331 (FIG. 3) and stringers 332. For example, step 202 may include activating gripping units 138 to secure an arm set 132 to the composite part 120. These operations are depicted, for example, in FIG. 3. If the gripping units 138 comprise vacuum device, such as vacuum couplers 343 shown in FIG. 3, this comprises engaging the vacuum couplers 343 to form a vacuum chamber 345 defined/formed in part by the composite part 120. Then evacuating vacuum chamber 345 coupling gripping unit 342 to skin 331 of composite part 120. That is, mechanically coupling a first arm 350 to a first portion 141-1 may comprise placing a vacuum coupler 343 at the first arm set 132-1, comprising first arm 350 and second arm 360, into contact with the first portion 141-1. If the gripping units 138 comprise another type of end effector such as a pin, claw, or finger, this comprises mechanically mating the gripping units 138 to the part indexing features 122.

In one embodiment, lips 136 are coupled with the bearing edge 124 in order to align the gripping units 138, prior to the application of vacuum to engage the vacuum couplers 343 and the gripping units 138 with composite part 120. In this manner, lips 136 provide a general alignment of arm set 132 with composite part 120 for the gripping units 138 before the gripping units 138 are engaged.

Step 204 comprises mechanically coupling a second arm set 132-2, comprising first arm 350 and second arm 360 of the extraction tool 130 to a second portion 141-2 of the composite part 120, and may be performed in a similar manner to step 202 described above.

In step 206, drive 134 initiates separation of the composite part 120 from the mandrel 110 by performing the following operations until the composite part 120 is separated from the mandrel 110. The operations include iteratively flexing the arms sets 132 to elastically strain the first portion 141-1 and second portion 141-2 of the composite part 120 in sequence away from the mandrel 110, and adjusting and/or increasing the degree of elastic strain over a period of time as the arm sets 132 are iteratively manipulated to separate composite part 120 from mandrel 110. In this manner, elastic strain is applied to the composite part 120 over a period of time, via the vacuum couplers 343 and the lips 136 of the extraction tool 130. Specifically, the extraction tool 130 elastically strains the first portion 141-1 of the composite part 120 via a first arm set 132-1 in step 208, and elastically strains the second portion 141-2 of the composite part 120 via a second arm set 132-2 in step 210. In one embodiment, the arms elastically strain both first portion 141-1 and second portion 141-2 at once, while in another embodiment one or more first arms 350 on one side apply strain, followed by one or more second arms 360 at another side. In one embodiment, the amounts of strain, deflection, and/or force applied are cyclically ramped upwards and downwards by each arm, in cycles that are out of phase. Furthermore, these amounts of strain, deflection, and/or force may be slowly increased in value even as they continue to vary cyclically. Thus, in one embodiment, the elastic strain is iteratively increased by alternatingly increasing strain applied to the first arcuate portion 334, and increasing the elastic strain applied to the second arcuate portion 336. The iterative strain applied separates bond of resin at the composite part 120 from the mandrel 110.

In one embodiment, determining that the composite part 120 is separated from mandrel 110 is based on a reduction in resistance to translation of the composite part 120. That is, once the composite part 120 translates in response to applied forces into or out of the page of FIG. 3, the resin at the composite part 120 is released/separated from the mandrel 110, and hence the composite part 120 is demolded.

The action of the arm sets 132 causes the composite part 120 to start to separate from the mandrel 110 by degrees, which enables separation of composite parts 120 that have complex shapes such as stringers 332, insets and pad-ups. For example, in embodiments where the mandrel 110 includes troughs 322 for stringers beneath a half-barrel section 121, composite material may be successfully extracted from these troughs without causing out of tolerance conditions at the composite part 120 which would necessitate rework.

From this point, a lifting device may lift the arm sets 132 and the composite part 120 from the mandrel 110, and/or the mandrel 110 may be moved/advanced out from beneath the composite part 120 to return line 103.

Method 200 provides a technical benefit over prior techniques and systems, because it enables massive complex composite parts 120, particular unique structures like half-barrel section 121, to be effectively and efficiently separated from mandrel 110, and without resorting to mandrel tooling that must be separate or otherwise disassembles to effect separation from composite part 120 during the demolding process. This reduces the expense and complexity of associated mandrels 110, while further reducing labor associated with the disassembly and re-assembly of such mandrels. The time needed to demold the composite part 120 from mandrel 110 is less than the time needed to demold by disassembling the mandrel 110.

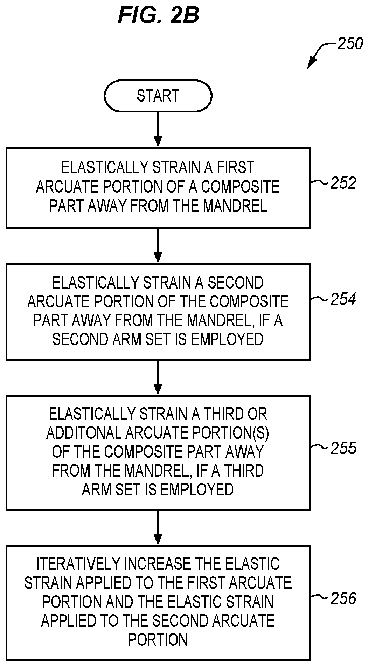

FIG. 2B is a flowchart illustrating a further method 250 for demolding composite part 120 from mandrel 110 in an illustrative embodiment. Step 252 comprises elastically straining a first portion 141-1 of composite part 120 away from mandrel 110. Step 254 includes elastically straining a second portion 141-2 of the composite part 120 away from the mandrel 110, if a second arm set 132-2 is employed and is performed at the same time as step 252 or at a different time from step 252. Step 255 includes elastically straining a third portion 141-3 or additional portions of the composite part 120 away from the mandrel 110, if a third arm set 132-3 is employed and is performed at the same time as step 252 or at a different time from step 252. Step 256 comprises iteratively increasing the elastic strain applied to the first portion 141-1 and the elastic strain applied to the second portion 141-2 and a third portion 141-3. In a further embodiment, elastically straining the first portion 141-1 is performed by gripping the composite part 120 with gripping unit 342 onto skin 331 and lip 346 to bearing edge 124 of the first portion 141-1. In this manner, elastically straining the first portion 141-1, second portion 141-2 and third portion 141-3 is performed through lip 346 into the bearing edge 124 first and then upward through composite part 120 using gripping unit 342 through skin 331, as applicable. Another version comprises elastically straining the first portion 141-1, second portion 141-2 and third portion 141-3 is performed through gripping unit 342 onto skin 331 initially and then via lip 346 into the bearing edge 124 downwards through composite part 120, as applicable.

In a further embodiment, iteratively increasing the elastic strain comprises alternately increasing the elastic strain applied to the first arcuate portion, and increasing the elastic strain applied to the second arcuate portion 336.

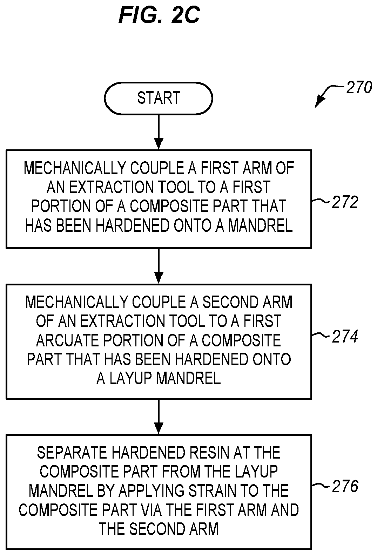

FIG. 2C is a flowchart illustrating a further method 270 for demolding a composite part from a mandrel 110 in an illustrative embodiment. Step 272 includes mechanically coupling a first arm set 132-1 of an extraction tool 130 to a first portion 141-1 of a composite part 120 that has been hardened onto a mandrel 110. Depending on design specifications, this may comprise applying vacuum coupling to the composite part 120 via vacuum couplers 343 at the first arm set 132-1, or coupling to composite part 120 via part indexing features 122, 122-1. Step 274 comprises mechanically coupling a second arm set 132-2 of an extraction tool 130 to a second portion 141-2 of the composite part 120, and may be performed in a similar manner to step 272 above. Step 276 includes separating/releasing hardened resin at the composite part 120 from the mandrel 110 by applying strain to the composite part 120 via the first arm set 132-1 and the second arm set 132-2. In one embodiment separating the hardened resin includes separating hardened resin between a stringer 332 of the composite part 120 from the trough 322 of mandrel 110.

Controller 150 determines that the hardened resin has separated from the mandrel based on a reduction in resistance to translation of the composite part 120 from the mandrel 110. For example, when there is no longer any added resistance to movement of the composite part 120 due to resin adhesion to mandrel 110, it can be concluded that the resin has separated from the mandrel 110.

FIGS. 3-7 depict an extraction tool 130 that iteratively elastically deflects composite part 120 comprising a half-barrel section 121 in an illustrative embodiment. These views correspond with view arrows 3 of FIG. 1A. In FIG. 3, a cross sectional view, the extraction tool 130 is placed over the composite part 120, which includes skin 331 and stringers 332. Drive 134, rotary actuators 135, actuatable joint 137 and sensors 139 are illustrated in block form. The drive 134 comprises one or more rotary actuators 135 that rotate actuatable joints 137 about axis 341 (FIG. 3) which are coupled with the arm sets 132. While rotary actuators 135 are discussed and illustrated, a linear application system (not shown) is also envisioned as an alternative or in addition to rotary actuators 135. This rotation causes the arm sets 132 to angularly deflect away from composite part 120. The amount of angular deflection of arm sets 132 is dynamically measured via sensors 139. The stringers 332 are presently held within troughs 322 (e.g., indents) at a mandrel 110. The mandrel 110 moves in a process direction 199 into the page along rollers 312 at a track 140. Another embodiment has an AGV (not shown) instead of rollers 312.

In this embodiment, the extraction tool 130 includes first arm set 132-1, second arm set 132-2, and third arm set 132-3 for demolding first portions 141-1, second portion 141-2 and third portion 141-3 of the composite part 120, respectively. Each of the arm sets 132 includes a flexural member 344, as well as gripping units 342, and a lip 346 coupled by a hinge 348 to flexural member 344. The flexural member 344 is contoured 349 to be complementary to the contour 347 of the composite part 120. Thus, in this embodiment, it forms an arc-(as shown in fig 3-7). In a further embodiment, the arcs formed by the first arm set 132-1, the second arm set 132-2 and third arm set 132-3 occupy different portions of the same circle 390. In a further embodiment, multiple arms are disposed at each of the portions of the circle 390. The lip 346 is held in contact with bearing edge 124 of the composite part 120 via application of bias or other means and facilitates application of peel force 351 through the lip 346 via hinge 348 from extraction tool 130.

One or more actuatable joints 137 are disposed between the first arm 350 and the second arm 360, mechanically coupling/uniting these components while enabling rotation 352 about axis 341. Gripping units 342 are distributed along the flexural member 344. Gripping units 342 are sandwiched between flexural member 344 and contour 347 when extraction tool 130 is removably attached to composite part 120. Gripping units 342 may comprise vacuum couplers 343 (e.g., vacuum couplers vacuum attach gripping unit 342 to the composite part 120 to form a vacuum chamber 345. Another embodiment has end effectors 138-2 arrayed along flexural member 344 that physically grip part indexing features 122, 122-1 that have been incorporated into or integrated into the design of the composite part 120). These indexing features 122, 122-1, not shown in FIGS. 3-7, may comprise holes, slots, notches, etc. and not specifically illustrated in FIG. 1A. A lifter 370 is shown for lifting the extraction tool 130 and the composite part 120 after extraction has been completed.

In FIG. 4, the first arm 350 is driven outward and upward, away from a surface of the mandrel 110. This separates the arcuate portion 334 from the mandrel 110. In this manner, the first arm 350 and the second arm 360 separate hardened resin coupling the composite part 120 with mandrel 110 by applying strain to the composite part 120 that deflects or peels the composite part 120 from the mandrel 110. A gap 369 is illustrated between composite 120 and mandrel 110 along first arm 350.

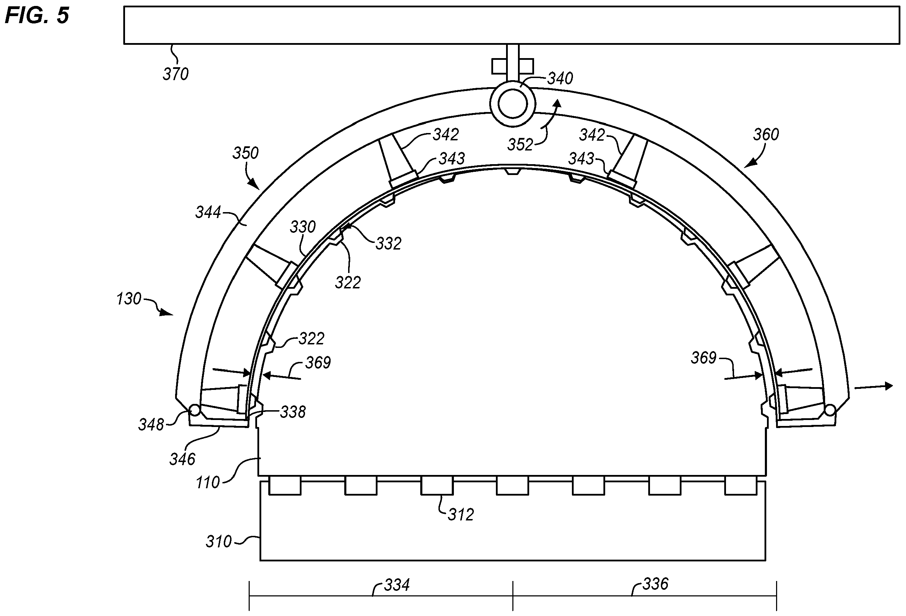

In FIG. 5, the second arm 360 is driven outward and upward, which separates the arcuate portion 336 from the mandrel 110. While the operations of FIGS. 4-5 are illustrated as singular motions, in further embodiments these operations are iteratively and incrementally performed in a cyclic or pulsed fashion, such that the first arm 350 and then the second arm 360 rotate 352 by a small angle, for instance five degrees and/or a distance of 2.54 to 7.62 cm (one to three inches), etc, and then iteratively increase deflection to larger angles, such as increasing by five degrees or 2.54 to 7.62 cm (one to three inches), etc. in a rocking pattern until demolding has been completed. The same iterative process is possible when moving from third arm set 132-3, to second arm set 132-2 and possibly iteratively into first arm set 132-1. That is, the operation is performed until the composite part 120 has separated from the mandrel 110, and the stringers 332 have separated from the troughs 322. A gap 369 is illustrated between composite part 120 and mandrel 110 along both first arm 350 and second arm 360. In a further embodiment, when one of the first arms 350 or second arms 360 is applying force to the composite part 120, the other first arm 350 or second arm 360 reduces or removes applied forces, to ensure that amounts of strain applied to the first portion 141-1, third portion 141-3 remain elastic and do not result in permanent deformation of the composite part 120. In one embodiment, this comprises releasing elastic strain on the composite part, causing the composite part to elastically return to a shape defined by the mandrel 110 upon demold.

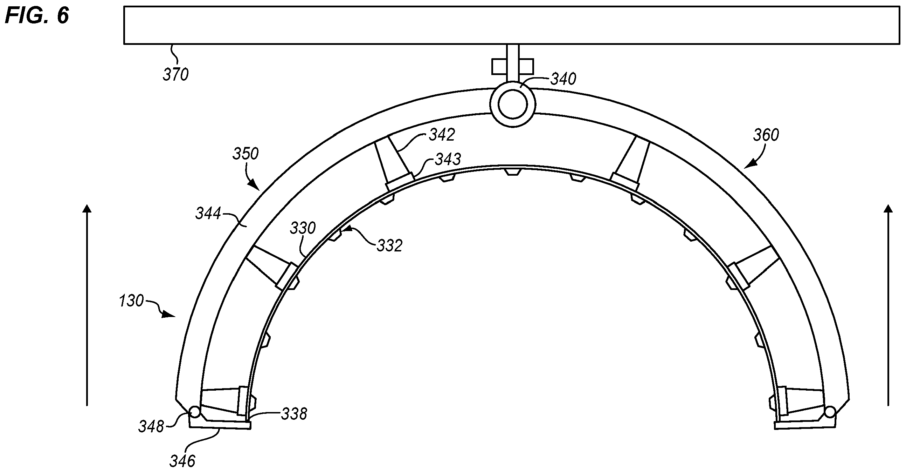

In FIG. 6, the mandrel 110 is removed and sent to return line 103. In one embodiment, this operation is performed by driving the mandrel 110 into or out of the page after a minimum amount of clearance, for instance enough clearance to cause passage of the stringers 332 from the troughs 322 between the mandrel 110 and the composite part 120 has been achieved. In a further embodiment, the extraction tool 130 is lifted away with composite part 120 from the mandrel 110 via the operation of lifter 370 after demolding has been completed.

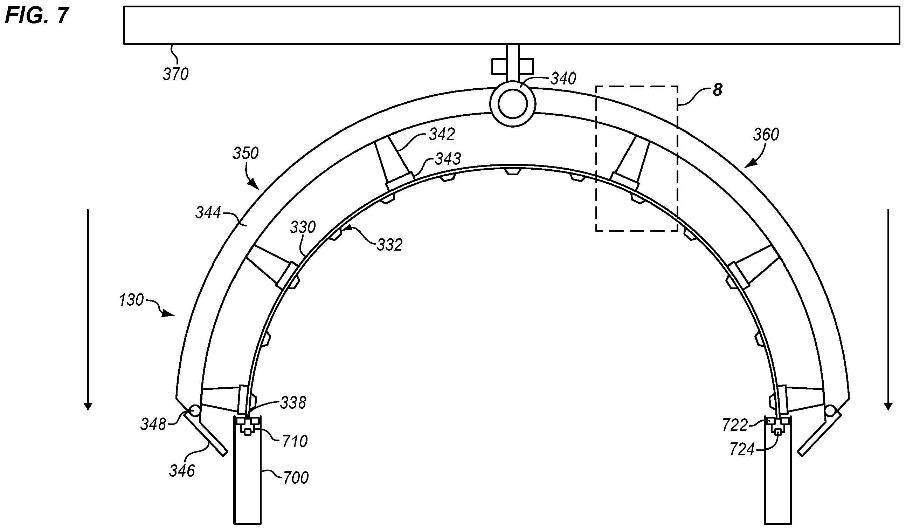

The extraction tool 130 is then moved to a new location shown in FIG. 7 and elastic strain is removed. The composite part 120 is poised above a track comprising stanchions 700 which retain the composite part 120 in grooves 710, while enabling motion of the composite part 120 in the process direction 199 into the page along rollers 724. In one embodiment, lips 346 are lowered via hinges 348 to expose the edge 338 while vacuum couplers 343 continue to apply suction and the composite part 120 is poised above the stanchions 700. Lowering the lips 346 further prevents the lips 346 from contacting the stanchions 700 (and any rollers disposed at the stanchions 700). The exposed edge 338 is then lowered into position into grooves 710, between the pinch rollers 722 and onto rollers 724. In one embodiment the weight of composite part 120 is conveyed through bearing edge 124 and is borne by rollers 724, while in a further embodiment, pinch rollers 722 hold the bearing edge 124 in position. The grooves 710 help to conform the composite part 120 to a desired shape and contour 347 even though the mandrel 110 has been removed. The lips 346 release and uncouple during this process, enabling the bearing edges 124 of the composite part 120 to be placed in position within the grooves 710. The extraction tool 130 then releases the gripping units 342, and returns to retrieve another composite part 120 from another mandrel 110. The composite part 120 proceeds in the process direction 199 to downstream work stations 160, which install frames, assembly the composite part together with other composite parts, cut out windows and doors, and perform other tasks.

While extraction tool 130 is illustrated as separating a composite part 120 in the form of a half-barrel section 121, the iterative and cyclic technique for elastically flexing the composite part 120 from a mandrel 110 may be performed for other composite parts, such as sections of wings, nacelles, etc.

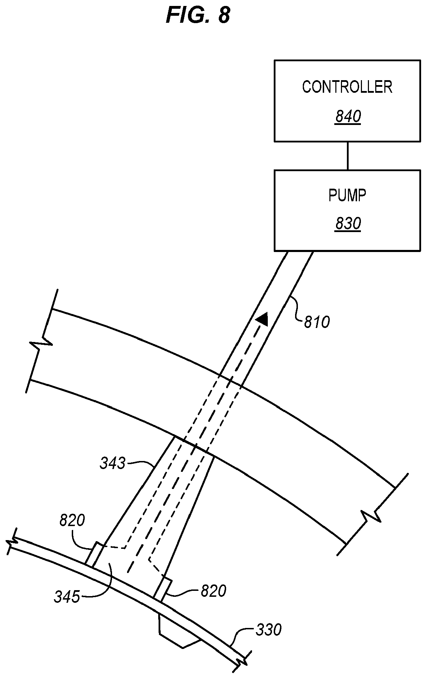

FIG. 8 is a zoomed in view of a vacuum coupler 343 of an arm of an extraction tool in an illustrative embodiment, and corresponds with region 8 of FIG. 7. In FIG. 8, a vacuum coupler 343, forms a vacuum chamber 345 that is bounded by flexible elements 820 (e.g., rubberized components that conform to the surface geometry of the composite part 120. Suction forces travel via tubing 810 to pump 830, which evacuate vacuum chamber 345 in each of one or more vacuum couplers 343, and is controllably operated by controller 840 to consistently apply a desired amount of vacuum. The evacuated vacuum chamber removeably couples vacuum coupler 343 and extraction tool 130 to composite part 120.

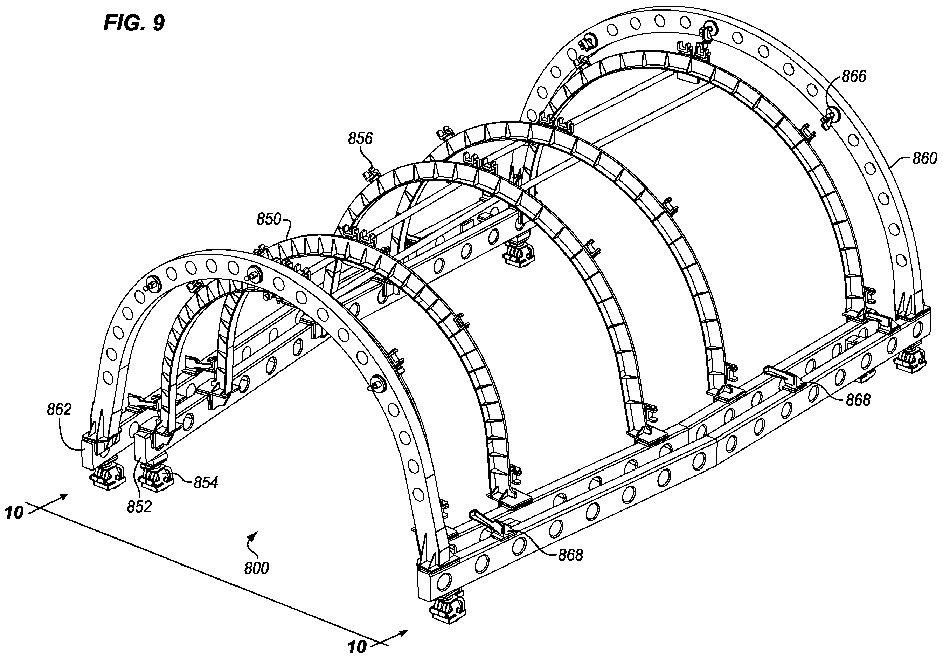

FIG. 9 is a perspective view of a tooling system 800 that includes an IML conveyance 850 and an Outer Mold Line (OML) conveyance 860 for a composite part 1000 in an illustrative embodiment. The composite part 1000 is created by cutting a hardened full barrel section longitudinally in half to form an upper half-barrel and/or a lower half-barrel section prior to or after demolding. The composite part 1000 is formed on either a full barrel section OML mandrel tool or a full barrel section IML mandrel tool. As a point of reference, mandrel 110 is a half-barrel section IML tool. The tooling system 800 operates as a handoff device that facilitates transfer of a composite part 1000 from either an IML or OML full barrel section mandrel.

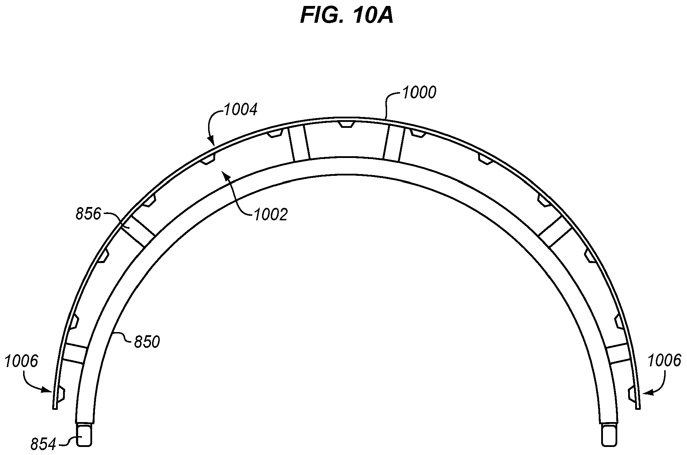

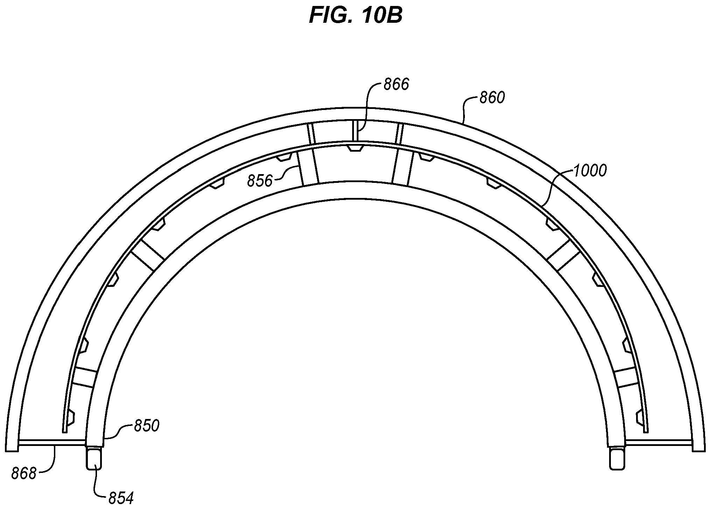

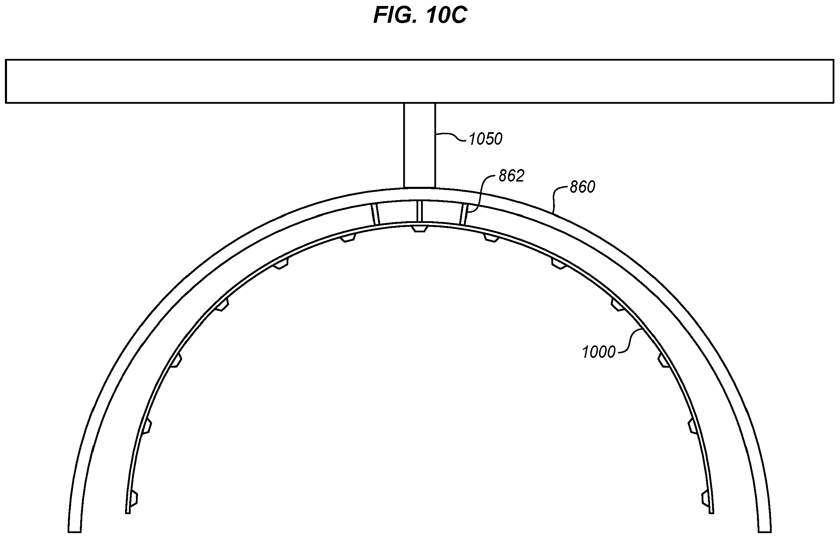

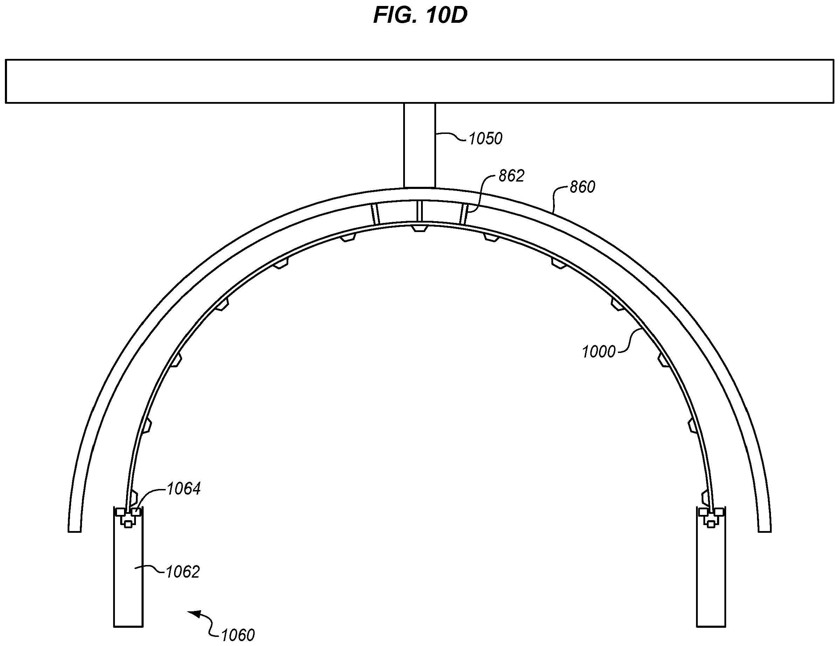

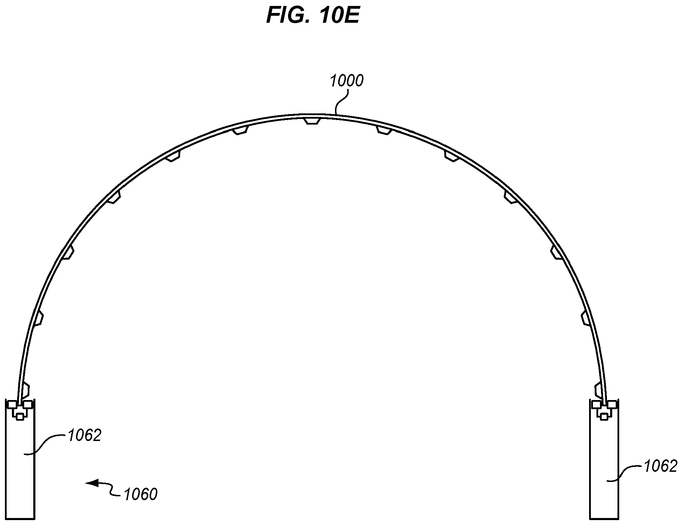

The IML conveyance 850 fits within a concavity 1002 (FIG. 10) defined by the composite part 1000, and exhibits a half-circle cross-section. The IML conveyance 850 includes frame 852, rollers 854, and affixation elements 856 which contact the composite part. The affixation elements 856 enable a composite part 1000 to be affixed to the IML conveyance 850, such as via physically mating to the composite part 1000 and/or being bolted to the composite part, or etc. The rollers 854 are affixed to the IML conveyance 850, and facilitate transport of the IML conveyance 850 while the composite part is affixed to the IML conveyance 850.

The OML conveyance 860 surrounds an exterior surface 1004 defined by the composite part 1000, and exhibits a half-circle cross-section which complementarily surrounds the IML conveyance 850. OML conveyance 860 includes frame 862 and affixation elements 866. The affixation elements 866 enable a composite part to be affixed to the OML conveyance 860, such as via physically mating to the composite part 1000 and/or being bolted to the composite part, or etc. Couplers 868 unite the IML conveyance 850 to the OML conveyance 860 to sandwich composite part 1000 there between. In one embodiment, the affixation elements 856 at the IML conveyance 850 couple with different features at the composite part than the affixation elements 866 at the OML conveyance 860.

FIGS. 10A-10E depict transport of a composite part to a track 144 (FIG. 10D) via the conveyances of FIG. 9 in an illustrative embodiment. In FIG. 10A, a demolded composite part 1000 is secured to the IML conveyance 850 via affixation elements 856 that couple with complementary indexing features 1006 of the composite part 1000, of a quality and quantity similar to part indexing feature 122 for composite part 120,. In FIG. 10B, the OML conveyance 860, and couplers 868 are installed to unite the OML conveyance 860 and the IML conveyance 850. The combined components are then transported beneath a crane 1050 or other tool for picking up the composite part 1000, OML conveyance 860 and IML conveyance 850 or transported upon rollers 854 or similar device. In FIG. 10C, the IML conveyance 850 is removed, and the crane 1050 picks up the OML conveyance 860, which is holding the composite part 1000. In FIG. 10D, the crane 1050 disposes the OML conveyance 860 and the composite part 1000 onto a track 144 comprising stanchions 1062 having rollers 1064, and then in FIG. 10E the OML conveyance 860 is removed. The composite part 1000 then proceeds along the track 144 in a process direction 199 into or out of the page.

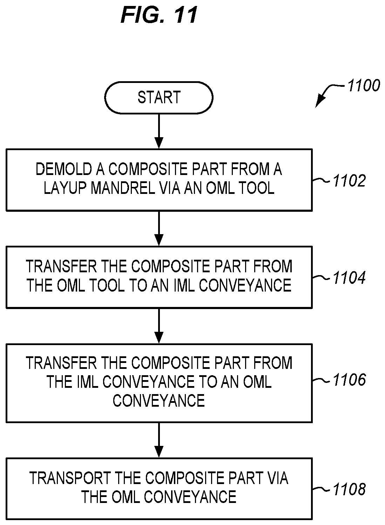

FIG. 11 is a flowchart illustrating a method 1100 for transferring a composite part 1000 to a conveyance in an illustrative embodiment, and may be operated via the tooling system 800 of FIG. 9-10. Step 1102 includes demolding a composite part 1000 from a mandrel 110 via an Outer Mold Line (OML) mandrel tool 130, such as extraction tool 130 of FIG. 1A, for example, via any of the methods of FIGS. 2A-2C. In one embodiment, the composite part 1000 is created by cutting a hardened full barrel section in half to form an upper half-barrel or a lower half-barrel section prior to or after demolding. Tooling system 800 is then brought in to transfer the demolded composite part 1000 to the assembly line 102 and track 144. Then, the composite part 1000 is placed onto track 144 and advanced through assembly line 102 in a manner similar to composite part 120.

Step 1104 includes transferring the composite part 1000 from the OML mandrel tool to IML conveyance 850. In one embodiment, transferring the composite part 1000 from the OML mandrel tool to the IML conveyance 850 comprises mating to indexing features 1006 in a manufacturing excess of the composite part 1000 including a manufacturing excess that will later be removed from the composite part 1000 prior to completion of assembly. The indexing features 1006 of composite part 1000 are indexed to the IML conveyance 850 prior to demold from the OML mandrel tool.

In one embodiment, this comprises coupling the composite part 1000 onto the IML conveyance 850, and then mating the affixation elements 856 to complementary indexing features 1006 at the composite part 1000. In a further embodiment, the composite part 1000 is vacuum coupled or attached via fasteners to the IML conveyance 850.

Step 1106 comprises transferring the composite part 1000 from the IML conveyance 850 to an OML conveyance 860 either before or after rolling the composite part 1000 to a desired track 144 placement location at assembly line 102 via the IML conveyance 850. In one embodiment, transferring the composite part 1000 from the IML conveyance 850 to the OML conveyance 860 comprises mating indexing features 1006 in a manufacturing excess of the composite part 1000 with complementary indexing features at the OML conveyance 860, and releasing the IML conveyance 850. The composite part 1000 would include manufacturing excess such as, for example, the manufacturing (127, 129) which is shown on the composite part 120 depicted in FIG. 1A. This manufacturing excess of composite part 1000 would be later removed from the composite part 1000. In a further embodiment, this comprises releasing the IML conveyance 850 form the composite part 1000 and affixing the OML conveyance 860 to the composite part 1000. Step 1108 includes transporting the composite part via the OML conveyance 860. In one embodiment, this comprises operating a crane 1050 to lift the OML conveyance 860 over a track 144, and then lowering the OML conveyance 860 to place the composite part 1000 into contact with the track 144. The OML conveyance 860 is then removed and the composite part 1000 proceeds along the track 144.

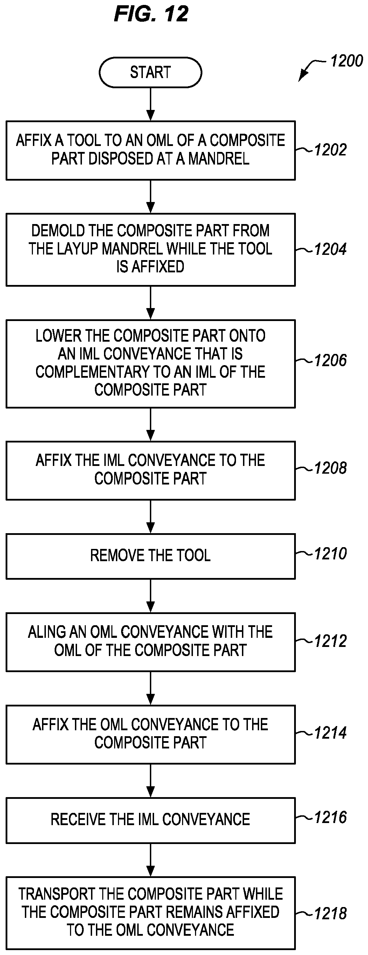

FIG. 12 is a flowchart illustrating a method 1200 for transporting a composite part 1000 to a track 144 for transport in an illustrative embodiment. Step 1202 includes affixing a tool such as extraction tool 130 to composite part 120, 1000 disposed upon an IML mandrel. Step 1204 includes demolding the composite part 120, 1000 from the mandrel while the extraction tool 130 is affixed. Step 1206 includes lowering the composite part 120, 1000 onto an Inner Mold Line (IML) conveyance 850 that is complementary to an IML of the composite part 120, 1000. Step 1208 includes affixing the IML conveyance 850 to the composite part 120, 1000. Step 1210 includes removing the extraction tool 130. Step 1212 includes aligning an OML conveyance 860 with the Outer Mold Line (OML) of the composite part 120, 1000. Step 1214 includes affixing the OML conveyance 860 to the composite part 120, 1000. Step 1216 includes removing the IML conveyance 850. Step 1218 includes transporting the composite part 120, 1000 while the composite part 120, 1000 remains affixed to the OML conveyance 860.

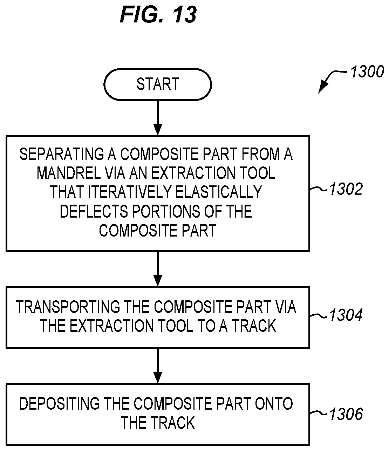

FIG. 13 is a further flowchart illustrating a method 1300 for demolding and transferring a composite part 120 in an illustrative embodiment. According to method 1300, step 1302 includes separating a composite part 120 from a mandrel 110 via an extraction tool 130 that iteratively elastically deflects first portion 141-1, second portion 141-2 and third portion 141-3 of the composite part 120. Step 1302 may be performed in any suitable manner, and in one embodiment occurs via method 200, 250, and/or 270 of FIGS. 2A-2C. Step 1304 includes transporting the composite part 120 via the extraction tool 130 to a track 144. This step may occur as shown and described with regard to FIGS. 3-6. Step 1306 includes depositing the composite part 120 onto the track 144. This step may occur as shown and described with regard to FIG. 7. In one embodiment, depositing the composite part 120 onto the track 144 comprises lowering the bearing edge 124 of the composite part 120 onto track 144. In a further embodiment, method 1300 further comprises retaining the composite part 120 in grooves at the track 144, and advancing the composite part 120 along the track 144 to work stations 160 that perform work on the composite part 120.

### Examples

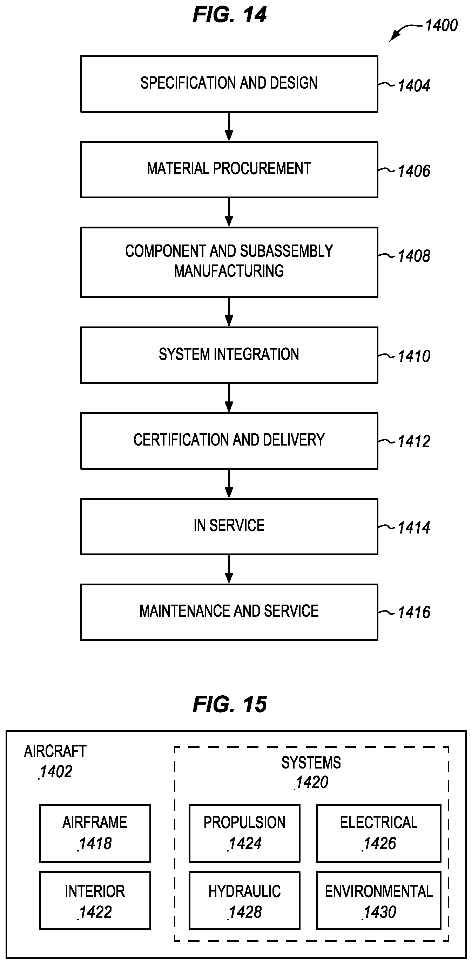

Referring more particularly to the drawings, embodiments of the disclosure may be described in the context of aircraft manufacturing and service in method 1400 as shown in FIG. 14 and an aircraft 1402 as shown in FIG. 15. During pre-production, method 1400 may include specification and design 1404 of the aircraft 1402 and material procurement 1406. During production, component and subassembly manufacturing 1408 and system integration 1410 of the aircraft 1402 takes place. Thereafter, the aircraft 1402 may go through certification and delivery 1412 in order to be placed in service 1414. While in service by a customer, the aircraft 1402 is scheduled for routine work in maintenance and service 1416 (which may also include modification, reconfiguration, refurbishment, and so on). Apparatus and methods embodied herein may be employed during any one or more suitable stages of the production and service described in method 1400 (e.g., specification and design 1404, material procurement 1406, component and subassembly manufacturing 1408, system integration 1410, certification and delivery 1412, service 1414, maintenance and service 1416) and/or any suitable component of aircraft 1402 (e.g., airframe 1418, systems 1420, interior 1422, propulsion system 1424, electrical system 1426, hydraulic system 1428, environmental 1430).

Each of the processes of method 1400 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 15, the aircraft 1402 produced by method 1400 may include an airframe 1418 with a plurality of systems 1420 and an interior 1422. Examples of systems 1420 include one or more of a propulsion system 1424, an electrical system 1426, a hydraulic system 1428, and an environmental system 1430. Any number of other systems may be included. Although an aerospace example is shown, the principles of the disclosure may be applied to other industries, such as the automotive industry.

As already mentioned above, apparatus and methods embodied herein may be employed during any one or more of the stages of the production and service described in method 1400. For example, components or subassemblies corresponding to component and subassembly manufacturing 1408 may be fabricated or manufactured in a manner similar to components or subassemblies produced while the aircraft 1402 is in service. Also, one or more apparatus embodiments, method embodiments, or a combination thereof may be utilized during the subassembly manufacturing 1408 and system integration 1410, for example, by substantially expediting assembly of or reducing the cost of an aircraft 1402. Similarly, one or more of apparatus embodiments, method embodiments, or a combination thereof may be utilized while the aircraft 1402 is in service, for example and without limitation during the maintenance and service 1416. Thus, the disclosure may be used in any stages discussed herein, or any combination thereof, such as specification and design 1404, material procurement 1406, component and subassembly manufacturing 1408, system integration 1410, certification and delivery 1412, service 1414, maintenance and service 1416) and/or any suitable component of aircraft 1402 (e.g., airframe 1418, systems 1420, interior 1422, propulsion system 1424, electrical system 1426, hydraulic system 1428, and/or environmental 1430.

In one embodiment, a part comprises a portion of airframe 1418, and is manufactured during component and subassembly manufacturing 1408. The part may then be assembled into an aircraft in system integration 1410, and then be utilized in service 1414 until wear renders the part unusable. Then, in maintenance and service 1416, the part may be discarded and replaced with a newly manufactured part. Inventive components and methods may be utilized throughout component and subassembly manufacturing 1408 in order to manufacture new parts.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

## Claims

1. A method (200) for demolding a composite part (120) from a mandrel (110), the method (200) comprising:
- mechanically coupling (202) a first arm (350) of an extraction tool (130) to a first arcuate portion (334) of the composite part (120) that has been hardened onto the mandrel (110);
- mechanically coupling (204) a second arm (360) of the extraction tool (130) to a second arcuate portion (336) of the composite part (120); and
- separating (206) the composite part (120) from the mandrel (110) by iteratively performing the following operations until the composite part (120) no longer contacts the mandrel (110):
- elastically straining (208) the first arcuate portion (334) of the composite part (120) via the first arm (350); and
- elastically straining (210) the second arcuate portion (336) of the composite part (120) via the second arm (360).

2. The method (200) of claim 1, further comprising one or more of:
- determining that the composite part (120) no longer contacts the mandrel (110) based on a reduction in resistance to translation of the composite part (120); and/or
- placing a lip (136) of the first arm (350) into contact with an end of the first arcuate portion (334), and placing a lip (136) of the second arm (360) into contact with an end of the second arcuate portion (336); and/or
- releasing elastic strain on the composite part (120), causing the composite part (120) to elastically return to a shape defined by the mandrel (110); and/or
- lifting the composite part (120) off of the mandrel (110) and placing the composite part (120) onto a track (144) for an assembly line; and/or
wherein mechanically coupling the first arm (350) to the first arcuate portion (334) comprises placing the first arm (350) into contact with a side of a half-barrel section (121) of fuselage; and mechanically coupling the second arm (360) to the second arcuate portion (336) comprises placing the first arm (350) into contact with a side of the half-barrel section (121) of fuselage.

3. The method (200) of claim 1 or 2, wherein:
mechanically coupling the first arm (350) to the first arcuate portion (334) comprises placing a vacuum coupler (343) at the first arm (350) into contact with the first arcuate portion (334); and mechanically coupling the second arm (360) to the second arcuate portion (336) comprises placing a vacuum coupler (343) at the second arm (360) into contact with the second arcuate portion (336), and
optionally wherein mechanically coupling the first arm (350) to the first arcuate portion (334) comprises gripping an indexing feature (122) in the first arcuate portion (334) via the first arm (350); and mechanically coupling the second arm (360) to the second arcuate portion (336) comprises gripping an indexing feature (122) in the second arcuate portion (336) via the second arm (360).

4. The method (200, 250) of any one of claims 1-3, wherein separating (206) the composite part (120) from the mandrel (110) further comprises iteratively increasing (256) the elastic strain applied to the first arcuate portion (334) and the elastic strain applied to the second arcuate portion (336); and
optionally further comprising:
- determining that resin at the composite part (120) has released from the mandrel (110) based on a reduction in resistance to translation of the composite part (120); and/or
optionally wherein elastically straining the first arcuate portion (334) is performed by gripping a bearing edge (124) of the first arcuate portion (334) or elastically straining the first arcuate portion (334) is performed from a bearing edge (124) of the first arcuate portion (334); and/or
optionally wherein iteratively increasing the elastic strain comprises alternately increasing the elastic strain applied to the first arcuate portion (334), and increasing the elastic strain applied to the second arcuate portion (336); and/or
optionally further including elastically straining a third portion (141-3) of the composite part (120) away from the mandrel (110).

5. The method (270) according to claim 1 or 3, the method (270) comprising mechanically coupling (272) a first arm set (132-1) of an extraction tool (130) to the first arcuate portion (141-1) of the composite part (120), wherein the first arm set (132-1) comprises the first arm (350) and the second arm (360); and
optionally wherein mechanically coupling a second arm set (132-2) of the extraction tool (130) to the second portion (141-2) of the composite part (120) comprises applying vacuum coupling to the composite part (120) via vacuum couplers (343) at the second arm set (132-2); and/or
optionally wherein separating hardened resin (276) at the composite part (120) from the mandrel (110) by applying strain to the composite part (120) via the first arm (350) and the second arm (360) includes separating hardened resin (276) between a stringer (332) of the composite part (120) from a trough (322) of mandrel (110).

6. The method (1100) according to any of the previous claims, wherein the extraction tool (130) comprises an Outer Mold Line (OML) mandrel tool (130), the method (1100) further comprising:
- transferring the composite part (1000) away from the OML mandrel tool (130) to an Inner Mold Line (IML) conveyance (850);
- transferring the composite part (1000) away from the IML conveyance (850) to an OML conveyance (860); and
- transporting the composite part (1000) via the OML conveyance (860); and
optionally wherein transferring the composite part (1000) away from the OML mandrel tool (130) to the IML conveyance (850) comprises coupling the composite part (1000) onto the IML conveyance (850), and mating affixation elements (856) to the indexing features (1006) at the composite part (1000); and/or
optionally wherein the composite part (1000) is vacuum coupled or attached via fasteners to the IML conveyance (850); and/or
optionally wherein transferring the composite part (1000) from the IML conveyance (850) to the OML conveyance (860) comprises mating indexing features (1006) of the composite part (1000) in a manufacturing excess (127, 129) of the composite part (1000) with the indexing features (1006) at the OML conveyance (860), and releasing the IML conveyance (850); and/or
optionally wherein transferring the composite part (1000) away from the OML mandrel tool (130) to the Inner Mold Line (IML) conveyance (850) and transferring the composite part (1000) away from the IML conveyance (850) to the OML conveyance (860) comprises:
- lowering (1206) the composite part (120, 1000) onto an IML conveyance (850) that is complementary to an IML of the composite part (120, 1000);
- affixing (1208) the IML conveyance to the composite part (120, 1000);
- removing (1210) the tool (130);
- aligning (1212) an OML conveyance (860) with the OML of the composite part (120, 1000);
- affixing (1214) the OML conveyance (860) to the composite part (120, 1000);
- receiving (1216) the IML conveyance (850); and
- transporting (1218) the composite part (120, 1000) while the composite part (120, 1000) remains affixed to the IML conveyance (850).

7. The method (1100) of claim 6, wherein:
transferring the composite part (1000) away from the OML mandrel tool (130) to the IML conveyance (850) comprises: mating indexing features (1006) of the composite part (120) in a manufacturing excess (127, 129) of the composite part (1000) to the IML conveyance (850); and
optionally wherein the indexing features (1006) of composite part (1000) are indexed to the IML conveyance (850) prior to demold from the OML mandrel tool (130).

8. The method (1100) of any one of claims 6 or 7, wherein transporting the composite part (1000) via the OML conveyance (860) comprises:
operating a crane (1050) to lift the OML conveyance (860) over a track (144); and
lowering the OML conveyance (860) to place the composite part (1000) into contact with the track (144); and
optionally wherein the OML conveyance (860) is removed and the composite part (1000) proceeds along the track (144).

9. The method (1300) according to any of the foregoing claims, wherein:
separating a composite part (120) from a mandrel (110) via an extraction tool (130) iteratively elastically deflects portions of the composite part (120); and transporting the composite part (120) via the extraction tool (130) to a track (144); and depositing the composite part (120) onto the track (144); and
optionally wherein depositing the composite part (120) onto the track (144) comprises lowering a bearing edge (124) of the composite part (120) onto track (144) and/or
optionally wherein the track comprises stanchions (700) which retain the composite part (120) in grooves (710), and the method (1300) further comprises:
- retaining the composite part (120) in the grooves (710); and
- advancing the composite part (120) along the track (144) to work stations (160) that perform work on the composite part (120).

10. A system for demolding a composite part (120) from a mandrel (110), the system comprising:
a first arm (350) comprising:
- a flexural member (344) that is complementary to a contour of a composite part (120) that has been hardened onto a mandrel (110); and
- gripping units (138, 342) that are disposed along the flexural member (344) and that mechanically couple with a first arcuate portion (334) of the composite part (120);
a second arm (360) comprising:
- a flexural member (344) that is complementary to a contour of the composite part (120); and
- gripping units (138, 342) that are disposed along the flexural member (344) and that mechanically couple with a second arcuate portion (336) of the composite part (120); and
a control drive (134) that selectively rotates the first arm (350) and the second arm (360), resulting in elastic strain being iteratively applied to the first arcuate portion (334) and the second arcuate portion (336).

11. The system of claim 10, wherein:
the first arm (350) further comprises a lip (136) that engages with an end of the first arcuate portion (334); and the second arm (360) further comprises a lip (136) that engages with an end of the second arcuate portion (336); and/or
wherein the gripping units (138, 342) comprise:
- vacuum couplers (343) that contact and apply suction to the composite part (120); or
- end effectors (138-2) that physically grip indexing features (122) at the composite part (120).

12. The system of any one of claims 10 or 11, further comprising an actuatable joint (137) that couples the first arm (350) and the second arm (360).

13. The system of any one of claims 10 - 12, further comprising a crane (1050).

14. A non-transitory computer readable medium installed in the system of claims 10 to 13 and embodying programmed instructions which, when executed by a processor, are operable for performing a method according to any of the claims 1-9.

15. Fabricating a portion of an aircraft using the system of any one of claims 10 - 12 .

## Patentansprüche

1. Verfahren (200) zum Entformen eines Verbundteils (120) von einem Dorn (110), wobei das Verfahren Folgendes (200) umfasst:
- mechanisches Koppeln (202) eines ersten Arms (350) eines Entnahmewerkzeugs (130) mit einem ersten bogenförmigen Abschnitt (334) des Verbundteils (120), das auf dem Dorn (110) gehärtet worden ist;
- mechanisches Koppeln (204) eines zweiten Arms (360) des Entnahmewerkzeugs (130) mit einem zweiten bogenförmigen Abschnitt (336) des Verbundteils (120); und
- Trennen (206) des Verbundteils (120) von dem Dorn (110) durch wiederholtes Durchführen der folgenden Vorgänge, bis das Verbundteil (120) den Dorn (110) nicht mehr berührt:
- elastisches Belasten (208) des ersten bogenförmigen Abschnitts (334) des Verbundteils (120) über den ersten Arm (350); und
- elastisches Belasten (210) des zweiten bogenförmigen Abschnitts (336) des Verbundteils (120) über den zweiten Arm (360).

2. Verfahren (200) nach Anspruch 1, das ferner eines oder mehrere der Folgenden umfasst:
- Bestimmen, dass das Verbundteil (120) den Dorn (110) nicht mehr berührt, basierend auf einer Verringerung des Widerstands gegen eine Verschiebung des Verbundteils (120); und/oder
- Platzieren einer Lippe (136) des ersten Arms (350) in Kontakt mit einem Ende des ersten bogenförmigen Abschnitts (334) und Platzieren einer Lippe (136) des zweiten Arms (360) in Kontakt mit einem Ende des zweiten bogenförmigen Abschnitts (336); und/oder
- Aufheben der elastischen Belastung an dem Verbundteil (120), wodurch das Verbundteil (120) elastisch in eine durch den Dorn (110) definierte Form zurückkehrt; und/oder
- Abheben des Verbundteils (120) von dem Dorn (110) und Platzieren des Verbundteils (120) auf einer Schiene (144) für eine Montagelinie; und/oder
wobei das mechanische Koppeln des ersten Arms (350) mit dem ersten bogenförmigen Abschnitt (334) das Platzieren des ersten Arms (350) in Kontakt mit einer Seite eines Halbrohrabschnitts (121) des Rumpfes umfasst; und das mechanische Koppeln des zweiten Arms (360) mit dem zweiten bogenförmigen Abschnitt (336) das Platzieren des ersten Arms (350) in Kontakt mit einer Seite des Halbrohrabschnitts (121) des Rumpfes umfasst.

3. Verfahren (200) nach Anspruch 1 oder 2, wobei:
das mechanische Koppeln des ersten Arms (350) mit dem ersten bogenförmigen Abschnitt (334) das Platzieren eines Vakuumkopplers (343) an dem ersten Arm (350) in Kontakt mit dem ersten bogenförmigen Abschnitt (334) umfasst; und das mechanische Koppeln des zweiten Arms (360) mit dem zweiten bogenförmigen Abschnitt (336) das Platzieren eines Vakuumkopplers (343) an dem zweiten Arm (360) in Kontakt mit dem zweiten bogenförmigen Abschnitt (336) umfasst, und
gegebenenfalls wobei das mechanische Koppeln des ersten Arms (350) mit dem ersten bogenförmigen Abschnitt (334) das Ergreifen eines Indexierungselements (122) in dem ersten bogenförmigen Abschnitt (334) über den ersten Arm (350) umfasst; und das mechanische Koppeln des zweiten Arms (360) mit dem zweiten bogenförmigen Abschnitt (336) das Ergreifen eines Indexierungselements (122) in dem zweiten bogenförmigen Abschnitt (336) über den zweiten Arm (360) umfasst.

4. Verfahren (200, 250) nach einem der Ansprüche 1 bis 3, wobei das Trennen (206) des Verbundteils (120) von dem Dorn (110) ferner das wiederholte Erhöhen (256) der elastischen Belastung, die auf den ersten bogenförmigen Abschnitt (334) ausgeübt wird, und der elastischen Belastung, die auf den zweiten bogenförmigen Abschnitt (336) ausgeübt wird, umfasst; und gegebenenfalls ferner umfassend:
- Bestimmen, dass sich Harz an dem Verbundteil (120) von dem Dorn (110) gelöst hat, basierend auf einer Verringerung des Widerstands gegen eine Verschiebung des Verbundteils (120); und/oder
gegebenenfalls wobei das elastische Belasten des ersten bogenförmigen Abschnitts (334) durch Ergreifen einer tragenden Kante (124) des ersten bogenförmigen Abschnitts (334) durchgeführt wird oder das elastische Belasten des ersten bogenförmigen Abschnitts (334) von einer tragenden Kante (124) des ersten bogenförmigen Abschnitts (334) aus durchgeführt wird; und/oder
wobei gegebenenfalls das wiederholte Erhöhen der elastischen Belastung das abwechselnde Erhöhen der elastischen Belastung, die auf den ersten bogenförmigen Abschnitt (334) ausgeübt wird, und der elastischen Belastung, die auf den zweiten bogenförmigen Abschnitt (336) ausgeübt wird, umfasst; und/oder
gegebenenfalls ferner enthaltend das elastische Belasten eines dritten Abschnitts (141-3) des Verbundteils (120) weg von dem Dorn (110).

5. Verfahren (270) nach Anspruch 1 oder 3, wobei das Verfahren (270) das mechanische Koppeln (272) eines ersten Armsatzes (132-1) eines Entnahmewerkzeugs (130) mit dem ersten bogenförmigen Abschnitt (141-1) des Verbundteils (120) umfasst, wobei der erste Armsatz (132-1) den ersten Arm (350) und den zweiten Arm (360) umfasst; und
wobei gegebenenfalls das mechanische Koppeln eines zweiten Armsatzes (132-2) des Entnahmewerkzeugs (130) mit dem zweiten Abschnitt (141-2) des Verbundteils (120) das Anlegen einer Vakuumkopplung an das Verbundteil (120) über Vakuumkoppler (343) an dem zweiten Armsatz (132-2) umfasst; und/oder
wobei gegebenenfalls das Trennen von gehärtetem Harz (276) an dem Verbundteil (120) von dem Dorn (110) durch Anlegen einer Belastung an das Verbundteil (120) über den ersten Arm (350) und den zweiten Arm (360) das Trennen von gehärtetem Harz (276) zwischen einem Stringer (332) des Verbundteils (120) von einer Mulde (322) des Dorns (110) enthält.

6. Verfahren (1100) nach einem der vorhergehenden Ansprüche, wobei das Entnahmewerkzeug (130) ein OML-Dornwerkzeug (Outer Mold Line, äußere Formlinie) (130) umfasst, wobei das Verfahren (1100) ferner Folgendes umfasst:
- Übermitteln des Verbundteils (1000) weg von dem OML-Dornwerkzeug (130) zu einem IML-Förderer (Inner Mold Line, innere Formlinie) (850);
- Übermitteln des Verbundteils (1000) weg von dem IML-Förderer (850) zu einem OML-Förderer (860); und
- Transportieren des Verbundteils (1000) über den OML-Förderer (860); und
gegebenenfalls wobei das Übermitteln des Verbundteils (1000) weg von dem OML-Dornwerkzeug (130) zu dem IML-Förderer (850) das Koppeln des Verbundteils (1000) an den IML-Förderer (850) und das Verbinden von Befestigungselementen (856) mit den Indexierungselementen (1006) an dem Verbundteil (1000) umfasst; und/oder
gegebenenfalls wobei das Verbundteil (1000) mit dem IML-Förderer (850) vakuumgekoppelt oder über Befestigungselemente daran befestigt wird; und/oder
gegebenenfalls wobei das Übermitteln des Verbundteils (1000) von dem IML-Förderer (850) zu dem OML-Förderer (860) das Verbinden von Indexierungselementen (1006) des Verbundteils (1000) in einem Fertigungsüberschuss (127, 129) des Verbundteils (1000) mit den Indexierungselementen (1006) an dem OML-Förderer (860) und das Freigeben des IML-Förderers (850) umfasst; und/oder
gegebenenfalls wobei das Übermitteln des Verbundteils (1000) weg von dem OML-Dornwerkzeug (130) zu dem IML-Förderer (Inner Mold Line) (850) und das Übermitteln des Verbundteils (1000) weg von dem IML-Förderer (850) zu dem OML-Förderer (860) Folgendes umfasst:
- Absenken (1206) des Verbundteils (120, 1000) auf einen IML-Förderer (850), der komplementär zu einer inneren Formlinie (IML) des Verbundteils (120, 1000) ist;
- Befestigen (1208) des IML-Förderers an dem Verbundteil (120, 1000);
- Entfernen (1210) des Werkzeugs (130);
- Ausrichten (1212) eines OML-Förderers (860) mit der äußeren Formlinie (OML) des Verbundteils (120, 1000);
- Befestigen (1214) des OML-Förderers (860) an dem Verbundteil (120, 1000);
- Empfangen (1216) des IML-Förderers (850); und
- Transportieren (1218) des Verbundteils (120, 1000), während das Verbundteil (120, 1000) an dem IML-Förderer (850) befestigt bleibt.

7. Verfahren (1100) nach Anspruch 6, wobei:
das Übermitteln des Verbundteils (1000) weg von dem OML-Dornwerkzeug (130) zu dem IML-Förderer (850) Folgendes umfasst: Verbinden von Indexierungselementen (1006) des Verbundteils (120) in einem Fertigungsüberschuss (127, 129) des Verbundteils (1000) mit dem IML-Förderer (850); und
gegebenenfalls wobei die Indexierungselemente (1006) des Verbundteils (1000) vor dem Entformen von dem OML-Dornwerkzeug (130) an den IML-Förderer (850) indexiert werden.

8. Verfahren (1100) nach einem der Ansprüche 6 oder 7, wobei das Transportieren des Verbundteils (1000) über den OML-Förderer (860) Folgendes umfasst:
Betreiben eines Krans (1050) zum Anheben des OML-Förderers (860) über eine Schiene (144); und
Absenken des OML-Förderers (860), um das Verbundteil (1000) in Kontakt mit der Schiene (144) zu platzieren; und
gegebenenfalls wobei der OML-Förderer (860) entfernt wird und das Verbundteil (1000) sich entlang der Schiene (144) fortbewegt.

9. Verfahren (1300) nach einem der vorhergehenden Ansprüche, wobei:
das Trennen eines Verbundteils (120) von einem Dorn (110) über ein Entnahmewerkzeug (130) Abschnitte des Verbundteils (120) wiederholt elastisch auslenkt; und Transportieren des Verbundteils (120) über das Entnahmewerkzeug (130) zu einer Schiene (144); und Ablegen des Verbundteils (120) auf der Schiene (144); und
gegebenenfalls wobei das Ablegen des Verbundteils (120) auf der Schiene (144) das Absenken einer tragenden Kante (124) des Verbundteils (120) auf die Schiene (144) umfasst, und/oder
gegebenenfalls wobei die Schiene Rungen (700) umfasst, die das Verbundteil (120) in Nuten (710) halten, und das Verfahren (1300) ferner Folgendes umfasst:
- Festhalten des Verbundteils (120) in den Nuten (710); und
- Vorschieben des Verbundteils (120) entlang der Schiene (144) zu Arbeitsstationen (160), die Arbeiten an dem Verbundteil (120) durchführen.

10. System zum Entformen eines Verbundteils (120) von einem Dorn (110), wobei das System Folgendes (200) umfasst:
einen ersten Arm (350), der Folgendes umfasst:
- ein Biegeelement (344), das komplementär zu einer Kontur eines Verbundteils (120) ist, das auf einem Dorn (110) gehärtet worden ist; und
- Greifeinheiten (138, 342), die entlang des Biegeelements (344) angeordnet sind und die mechanisch mit einem ersten bogenförmigen Abschnitt (334) des Verbundteils (120) gekoppelt sind;
einen zweiten Arm (360), der Folgendes umfasst:
- ein Biegeelement (344), das komplementär zu einer Kontur eines Verbundteils (120) ist; und
- Greifeinheiten (138, 342), die entlang des Biegeelements (344) angeordnet sind und die mechanisch mit einem zweiten bogenförmigen Abschnitt (336) des Verbundteils (120) gekoppelt sind; und
einen Steuerantrieb (134), der wahlweise den ersten Arm (350) und den zweiten Arm (360) dreht, was zu einer elastischen Belastung führt, die wiederholt auf den ersten bogenförmigen Abschnitt (334) und den zweiten bogenförmigen Abschnitt (336) ausgeübt wird.

11. System nach Anspruch 10, wobei:
der erste Arm (350) ferner eine Lippe (136) umfasst, die mit einem Ende des ersten bogenförmigen Abschnitts (334) in Eingriff steht; und der zweite Arm (360) ferner eine Lippe (136) umfasst, die mit einem Ende des zweiten bogenförmigen Abschnitts (336) in Eingriff steht; und/oder
wobei die Greifeinheiten (138, 342) Folgendes umfassen:
- Vakuumkoppler (343), die mit dem Verbundteil (120) in Kontakt stehen und einen Unterdruck auf dieses ausüben; oder
- Endeffektoren (138-2), die Indexierungselemente (122) an dem Verbundteil (120) physisch ergreifen.

12. System nach einem der Ansprüche 10 oder 11, das ferner eine aktivierbare Gelenkverbindung (137) umfasst, die den ersten Arm (350) und den zweiten Arm (360) koppelt.

13. System nach einem der Ansprüche 10 bis 12, das ferner einen Kran (1050) umfasst.

14. Nicht flüchtiges computerlesbares Medium, das in dem System nach den Ansprüchen 10 bis 13 installiert ist und in dem programmierte Anweisungen enthalten sind, die, wenn sie von einem Prozessor ausgeführt werden, zur Durchführung eines Verfahrens nach einem der Ansprüche 1 bis 9 geeignet sind.

15. Fertigen eines Abschnitts eines Flugzeugs unter Verwendung des Systems nach einem der Ansprüche 10 bis 12.

## Revendications

1. Procédé (200) de démoulage d'une pièce composite (120) d'un mandrin (110), le procédé (200) comprenant les opérations consistant à :
- coupler mécaniquement (202) un premier bras (350) d'un outil d'extraction (130) à une première partie arquée (334) de la pièce composite (120) ayant été durcie sur le mandrin (110),
- coupler mécaniquement (204) un deuxième bras (360) de l'outil d'extraction (130) à une deuxième partie arquée (336) de la pièce composite (120), et
- séparer (206) la pièce composite (120) vis-à-vis du mandrin (110) en effectuant itérativement les opérations suivantes jusqu'à ce que la pièce composite (120) ne soit plus en contact avec le mandrin (110) :
- solliciter élastiquement (208) la première partie arquée (334) de la pièce composite (120) par le biais du premier bras (350), et
- solliciter élastiquement (210) la deuxième partie arquée (336) de la pièce composite (120) par le biais du deuxième bras (360).

2. Procédé (200) selon la revendication 1, comprenant en outre une ou plusieurs des opérations suivantes :
- détermination du fait que la pièce composite (120) n'est plus en contact avec le mandrin (110) compte tenu d'une réduction de la résistance à la translation de la pièce composite (120), et/ou
- mise en place d'une lèvre (136) du premier bras (350) en contact avec une extrémité de la première partie arquée (334), et mise en place d'une lèvre (136) du deuxième bras (360) en contact avec une extrémité de la deuxième partie arquée (336), et/ou
- interruption de la sollicitation élastique exercée sur la pièce composite (120), amenant la pièce composite (120) à revenir élastiquement à une forme définie par le mandrin (110), et/ou
- soulèvement de la pièce composite (120) du mandrin (110) et mise en place de la pièce composite (120) sur une glissière (144) pour chaîne d'assemblage, et/ou
dans lequel le couplage mécanique du premier bras (350) à la première partie arquée (334) comprend la mise en contact du premier bras (350) avec un côté d'une section en demi-fût (121) du fuselage, et le couplage mécanique du deuxième bras (360) à la deuxième partie arquée (336) comprend la mise en contact du premier bras (350) avec un côté de la section en demi-fût (121) du fuselage.

3. Procédé (200) selon la revendication 1 ou 2, dans lequel :
le couplage mécanique du premier bras (350) à la première partie arquée (334) comprend la mise en contact d'un coupleur à dépression (343) situé au niveau du premier bras (350) avec la première partie arquée (334), et le couplage mécanique du deuxième bras (360) à la deuxième partie arquée (336) comprend la mise en contact d'un coupleur à dépression (343) situé au niveau du deuxième bras (360) avec la deuxième partie arquée (336), et
facultativement, le couplage mécanique du premier bras (350) à la première partie arquée (334) comprend la saisie d'un élément d'indexation (122) présent dans la première partie arquée (334) par le biais du premier bras (350), et le couplage mécanique du deuxième bras (360) à la deuxième partie arquée (336) comprend la saisie d'un élément d'indexation (122) présent dans la deuxième partie arquée (336) par le biais du deuxième bras (360).

4. Procédé (200, 250) selon l'une quelconque des revendications 1 à 3, dans lequel la séparation (206) de la pièce composite (120) vis-à-vis du mandrin (110) comprend en outre l'augmentation itérative (256) de la sollicitation élastique appliquée à la première partie arquée (334) et de la sollicitation élastique appliquée à la deuxième partie arquée (336), et
le procédé comprenant facultativement en outre :
- la détermination du fait que la résine située au niveau de la pièce composite (120) s'est détachée du mandrin (110) compte tenu d'une réduction de résistance à la translation de la pièce composite (120), et/ou
la sollicitation élastique de la première partie arquée (334) étant facultativement réalisée par saisie d'un bord d'appui (124) de la première partie arquée (334) ou bien la sollicitation élastique de la première partie arquée (334) étant facultativement effectuée à partir d'un bord d'appui (124) de la première partie arquée (334), et/ou
l'augmentation itérative de la sollicitation élastique comprenant facultativement l'augmentation alternative de la sollicitation élastique appliquée à la première partie arquée (334) et de la sollicitation élastique appliquée à la deuxième partie arquée (336), et/ou
le procédé comprenant facultativement en outre la sollicitation élastique d'une troisième partie (141-3) de la pièce composite (120) pour l'éloigner du mandrin (110).

5. Procédé (270) selon la revendication 1 ou 3, le procédé (270) comprenant le couplage mécanique (272) d'un premier ensemble de bras (132-1) d'un outil d'extraction (130) à la première partie arquée (141-1) de la pièce composite (120), le premier ensemble de bras (132-1) comprenant le premier bras (350) et le deuxième bras (360) ;
ledit couplage mécanique d'un deuxième ensemble de bras (132-2) de l'outil d'extraction (130) à la deuxième partie (141-2) de la pièce composite (120) comprenant facultativement l'application d'un couplage à dépression à la pièce composite (120) par le biais de coupleurs à dépression (343) situés au niveau du deuxième ensemble de bras (132-2), et/ou
ladite séparation de la résine durcie (276) présente au niveau de la pièce composite (120) vis-à vis du mandrin (110) par application d'une sollicitation à la pièce composite (120) par le biais du premier bras (350) et du deuxième bras (360) comprenant facultativement la séparation de la résine durcie (276) entre une lisse (332) de la pièce composite (120) vis-à-vis d'un creux (322) présent dans le mandrin (110).

6. Procédé (1100) selon l'une quelconque des revendications précédentes, dans lequel l'outil d'extraction (130) comprend un outil de mandrin (130) de plan de joint extérieur (OML, Outer Mold Line), le procédé (1100) comprenant en outre les opérations consistant à :
- faire passer la pièce composite (1000) de l'outil de mandrin OML (130) vers un moyen de transport de plan de joint intérieur (IML, Inner Mold Line) (850),
- faire passer la pièce composite (1000) du moyen de transport IML (850) vers un moyen de transport OML (860), et
- transporter la pièce composite (1000) par le biais du moyen de transport OML (860) ;
le passage de la pièce composite (1000) de l'outil de mandrin OML (130) vers le moyen de transport IML (850) comprenant facultativement le couplage de la pièce composite (1000) au moyen de transport IML (850) et l'accouplement d'éléments de fixation (856) aux éléments d'indexation (1006) au niveau de la pièce composite (1000), et/ou
la pièce composite (1000) étant facultativement couplée sous l'effet d'une dépression ou fixée par le biais de fixations au moyen de transport IML (850), et/ou
le passage de la pièce composite (1000) du moyen de transport IML (850) vers le moyen de transport OML (860) comprenant facultativement l'accouplement d'éléments d'indexation (1006) de la pièce composite (1000) présents dans un excédent de fabrication (127, 129) de la pièce composite (1000) avec les éléments d'indexation (1006) présents au niveau du moyen de transport OML (860), et le dégagement du moyen de transport IML (850), et/ou
le passage de la pièce composite (1000) de l'outil de mandrin OML (130) vers le moyen de transport de plan de joint intérieur (IML, Inner Mold Line) (850) et le passage de la pièce composite (1000) du moyen de transport IML (850) vers le moyen de transport OML (860) comprenant facultativement :
- l'abaissement (1206) de la pièce composite (120, 1000) sur un moyen de transport IML (850) complémentaire d'un plan de joint intérieur de la pièce composite (120, 1000),
- la fixation (1208) du moyen de transport IML à la pièce composite (120, 1000),
- le retrait (1210) de l'outil (130),
- l'alignement (1212) d'un moyen de transport OML (860) avec le plan de joint intérieur de la pièce composite (120, 1000),
- la fixation (1214) du moyen de transport OML (860) à la pièce composite (120, 1000),
- la réception (1216) du moyen de transport IML (850), et
- le transport (1218) de la pièce composite (120, 1000) tandis que la pièce composite (120, 1000) reste fixée au moyen de transport IML (850).

7. Procédé (1100) selon la revendication 6, dans lequel :
le passage de la pièce composite (1000) de l'outil de mandrin OML (130) vers le moyen de transport IML (850) comprend : l'accouplement d'éléments d'indexation (1006) de la pièce composite (120) présents dans un excédent de fabrication (127, 129) de la pièce composite (1000) au moyen de transport IML (850), et
les éléments d'indexation (1006) de la pièce composite (1000) sont facultativement indexés sur le moyen de transport IML (850) avant son démoulage de l'outil de mandrin OML (130).

8. Procédé (1100) selon l'une quelconque des revendications 6 et 7, dans lequel le transport de la pièce composite (1000) par le biais du moyen de transport OML (860) comprend :
l'actionnement d'une grue (1050) pour soulever le moyen de transport OML (860) au-dessus d'une glissière (144), et
l'abaissement du moyen de transport OML (860) pour mettre la pièce composite (1000) en contact avec la glissière (144) ;
le moyen de transport OML (860) étant facultativement retiré et la pièce composite (1000) avançant le long de la glissière (144).

9. Procédé (1300) selon l'une quelconque des revendications précédentes, dans lequel :
la séparation d'une pièce composite (120) vis-à-vis d'un mandrin (110) par le biais d'un outil d'extraction (130) fait fléchir de manière élastique et itérative des parties d'une pièce composite (120), et le transport de la pièce composite (120) par le biais de l'outil d'extraction (130) jusqu'à une glissière (144), et le dépôt de la pièce composite (120) sur la glissière (144);
le dépôt de la pièce composite (120) sur la glissière (144) comprenant facultativement l'abaissement d'un bord d'appui (124) de la pièce composite (120) sur la glissière (144), et/ou
la glissière comprenant facultativement des montants (700) qui retiennent la pièce composite (120) dans des rainures (710), et le procédé (1300) comprend en outre :
- la retenue de la pièce composite (120) dans les rainures (710), et
- l'avancée de la pièce composite (120) le long de la glissière (144) jusqu'à des postes de travail (160) qui réalisent un travail sur la pièce composite (120).

10. Système de démoulage d'une pièce composite (120) d'un mandrin (110), le système comprenant :
un premier bras (350) comprenant :
- un élément de flexion (344) complémentaire d'un contour d'une pièce composite (120) qui a été durcie sur un mandrin (110), et
- des unités de saisie (138, 342) qui sont disposées le long de l'élément de flexion (344) et qui se couplent mécaniquement à une première partie arquée (334) de la pièce composite (120),
un deuxième bras (360) comprenant :
- un élément de flexion (344) qui est complémentaire d'un contour de la pièce composite (120), et
- des unités de saisie (138, 342) qui sont disposées le long de l'élément de flexion (344) et qui se couplent mécaniquement à une deuxième partie arquée (336) de la pièce composite (120), et
un entraînement de commande (134) qui fait tourner sélectivement le premier bras (350) et le deuxième bras (360), ce qui entraîne l'application itérative d'une sollicitation élastique à la première partie arquée (334) et à la deuxième partie arquée (336).

11. Système selon la revendication 10, dans lequel :
le premier bras (350) comprend en outre une lèvre (136) qui vient en prise avec une extrémité de la première partie arquée (334), et le deuxième bras (360) comprend en outre une lèvre (136) qui vient en prise avec une extrémité de la deuxième partie arquée (336), et/ou
dans lequel les unités de saisie (138, 342) comprennent :
- des coupleurs à dépression (343) qui entrent en contact et exercent un effet de ventouse sur la pièce composite (120), ou
- des organes effecteurs (138-2) qui saisissent physiquement des éléments d'indexation (122) présents au niveau de la pièce composite (120).

12. Système selon l'une quelconque des revendications 10 et 11, comprenant en outre une articulation actionnable (137) qui couple le premier bras (350) et le deuxième bras (360).

13. Système selon l'une quelconque des revendications 10 à 12, comprenant en outre une grue (1050).

14. Support non transitoire lisible par ordinateur installé dans le système des revendications 10 à 13 et comprenant des instructions programmées qui, lorsqu'elles sont exécutées par un processeur, permettent d'exécuter un procédé selon l'une quelconque des revendications 1 à 9.

15. Fabrication d'une partie d'un aéronef au moyen du système selon l'une quelconque des revendications 10 à 12.
